# EUROPEAN PATENT APPLICATION

(11) **EP 4 456 032 A1**
(43) Date of publication of application: **30.10.2024**
(21) Application number: 22910432.8
(22) Date of filing: 19.07.2022
(51) Int. Cl.: G08G 1/00, G05D 1/02, G08G 1/09

(54) **CONTROL METHOD, CONTROL DEVICE, AND PROGRAM**

(30) Priority: 21.12.2021 JP 2021207426
(71) Applicant: Panasonic Intellectual Property Management Co., Ltd., Kadoma-shi, Osaka 571-0057 (JP)
(72) Inventor: KUSAKABE, Toshihiko, Kadoma-shi, Osaka 571-0057 (JP)
(74) Representative: Novagraaf International SA
(86) International application number: PCT/JP2022/028049
(87) International publication number: WO 2023/119702

(57) **Abstract**

A control method according to the present disclosure is performed by a control device for use in remotely monitoring mobile bodies each of which autonomously performs a task, and includes: receiving, from a first mobile body included in the mobile bodies, a remote support request indicating a request for remote operation support (S101); identifying a second mobile body different from the first mobile body (S102); obtaining first and second task information about first and second tasks being performed by the first and second mobile bodies, and calculating priorities of the first and second tasks based on the first and second task information (S106); and when the priority of the first task is lower than that of the second task, transmitting, to the first mobile body, a first control command for remotely operating the first mobile body without hindering the second mobile body from performing the second task (S108).

## Description

### [Technical Field]

The present disclosure relates to control methods, control devices, and programs, and particularly relates to a control method performed by a control device for use in remotely monitoring a plurality of mobile bodies, the control device, and a program.

### [Background Art]

In recent years, for improved convenience, services have been developed to provide mobile bodies such as vehicles and robots that travel autonomously on public roads and carry out the task of delivering food or transporting people, for example.

However, at present, when there is an obstacle such as an object dropped on a route, for example, the vehicles and robots stop and cannot travel autonomously; therefore, it is necessary that the vehicle and robots be remotely controlled.

In view of this, for example, Patent Literature (PTL) 1 discloses a vehicle remote operation system for operating a remotely located vehicle.

### [Citation List]

### [Patent Literature]

[PTL 1] Japanese Unexamined Patent Application Publication No. 2004-206218

### [Summary of Invention]

### [Technical Problem]

However, a problem with the aforementioned related technique is that when a remote operator needs to remotely operate a self-driving car while remotely monitoring a plurality of self-driving cars, how to control the other self-driving cars is given no consideration.

The present disclosure is conceived in view of the above-described circumstances and has an object to provide a control method, a control device, and a program with which even when there is a mobile body that requires remote operation, degradation in services that the other mobile bodies provide can be minimized.

### [Solution to Problem]

In order to solve the aforementioned problem, a control method according to one aspect of the present disclosure is performed by a control device for use in remotely monitoring a plurality of mobile bodies each of which autonomously performs a task, and includes: receiving, from a first mobile body included in the plurality of mobile bodies, a remote support request indicating a request for remote operation support; identifying a second mobile body that is a mobile body different from the first mobile body; obtaining first task information about a first task being performed by the first mobile body and second task information about a second task being performed by the second mobile body; calculating a priority of the first task and a priority of the second task based on the first task information and the second task information, respectively; and when the priority of the first task is lower than the priority of the second task, transmitting, to the first mobile body, a first control command for remotely operating the first mobile body without hindering the second mobile body from performing the second task.

Note that these general and specific aspects may be implemented using a device, a system, an integrated circuit, a computer program, or a computer-readable recording medium such as a compact disc read-only memory (CD-ROM), or any combination of systems, methods, integrated circuits, computer programs, and recording media.

### [Advantageous Effects of Invention]

With the control method, etc., according to the present disclosure, even when there is a mobile body that requires remote operation, it is possible to minimize degradation in services that the other mobile bodies provide.

### [Brief Description of Drawings]

[FIG. 1]

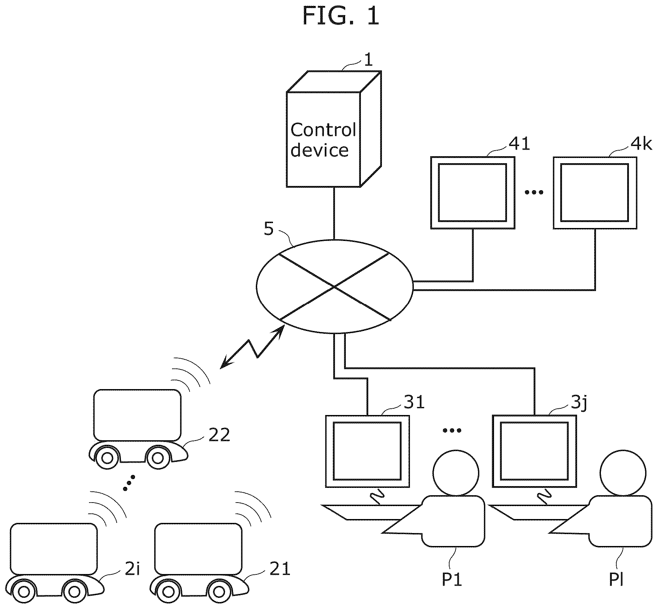

   FIG. 1 is a block diagram illustrating one example of the configuration of a control system according to an embodiment.
[FIG. 2]

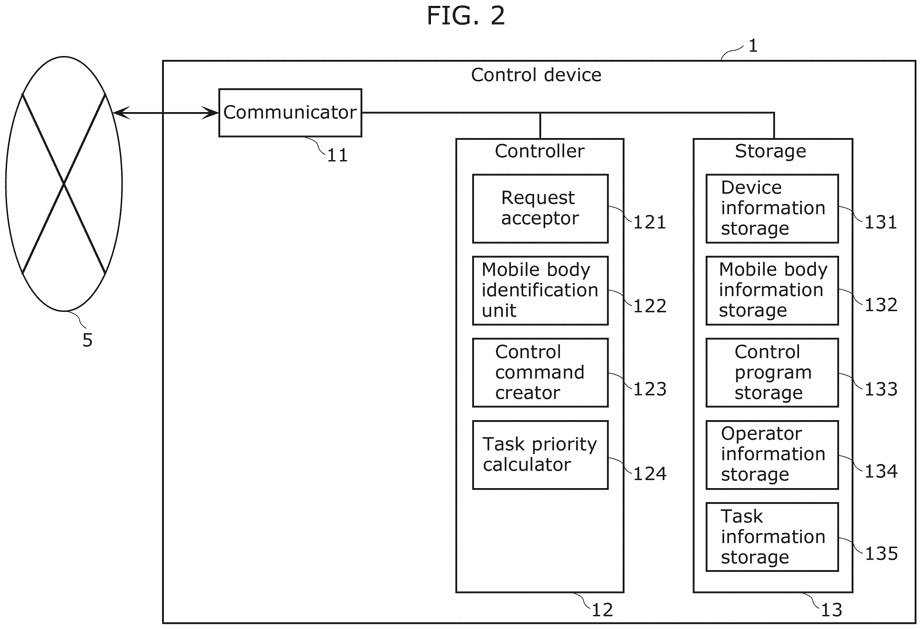

   FIG. 2 is a block diagram illustrating one example of the configuration of the control device illustrated in FIG. 1.
[FIG. 3]

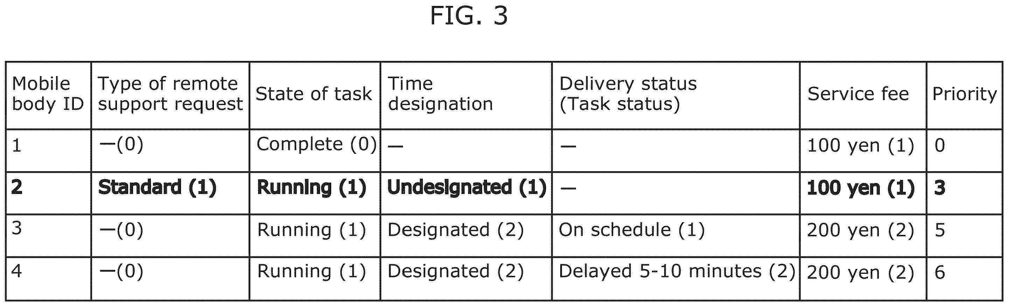

   FIG. 3 is a diagram illustrating one example of task priorities calculated by a task priority calculator according to an embodiment.
[FIG. 4]

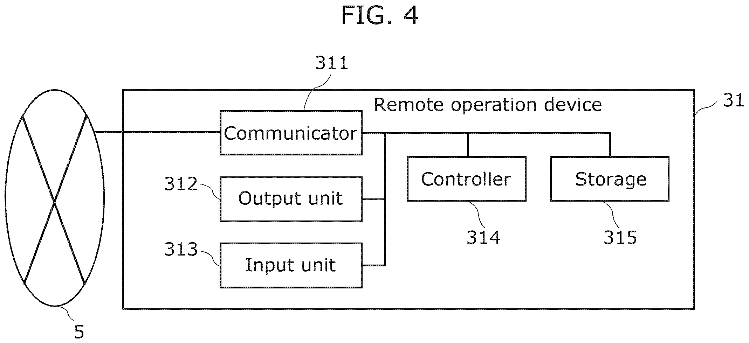

   FIG. 4 is a block diagram illustrating one example of the configuration of the remote operation device illustrated in FIG. 1.
[FIG. 5]

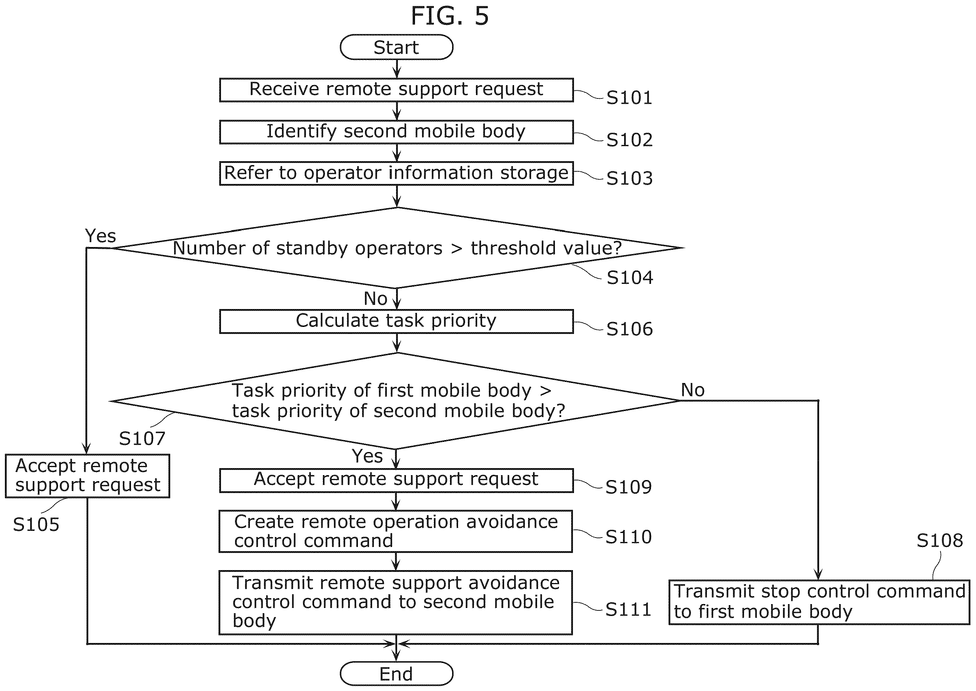

   FIG. 5 is a flowchart illustrating one example of the operation of a control device according to an embodiment.
[FIG. 6]

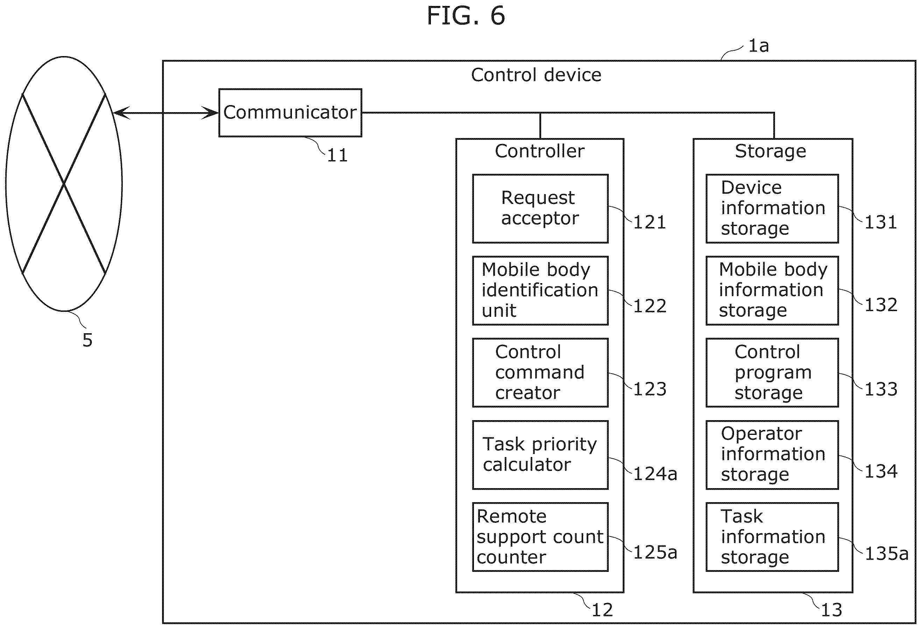

   FIG. 6 is a block diagram illustrating one example of the configuration of the control device according to Variation 1.
[FIG. 7]

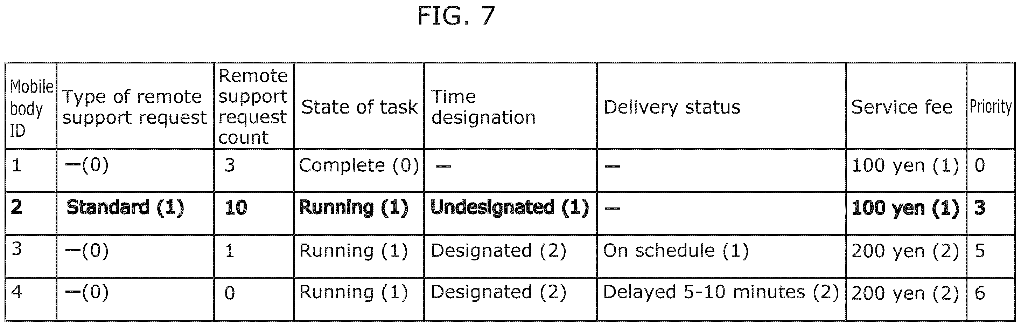

   FIG. 7 is a diagram illustrating one example of task priorities calculated by a task priority calculator according to Variation 1.
[FIG. 8]

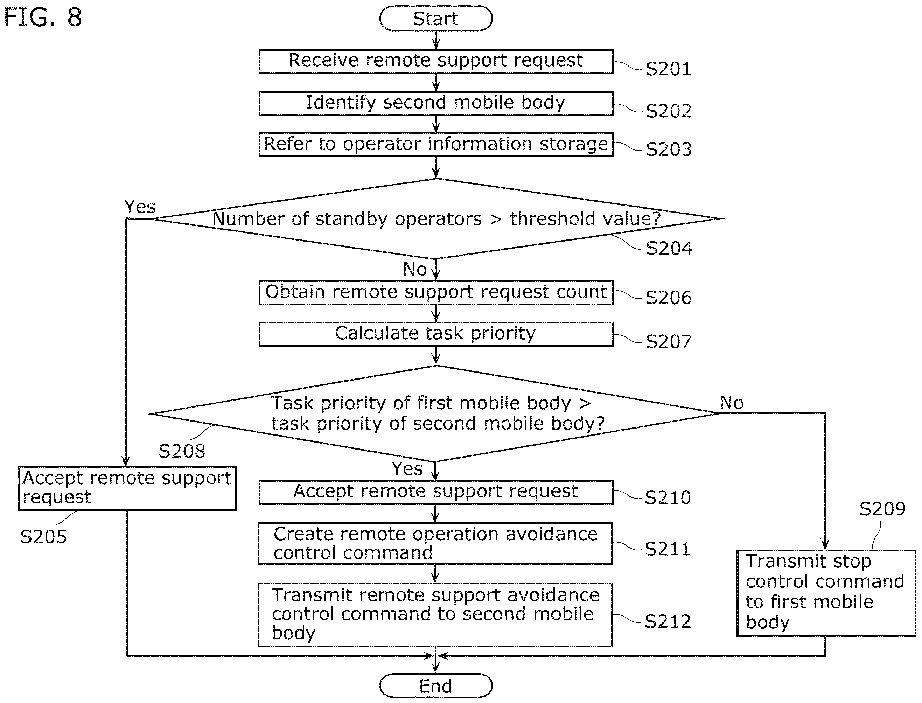

   FIG. 8 is a flowchart illustrating one example of the operation of a control device according to Variation 1.
[FIG. 9]

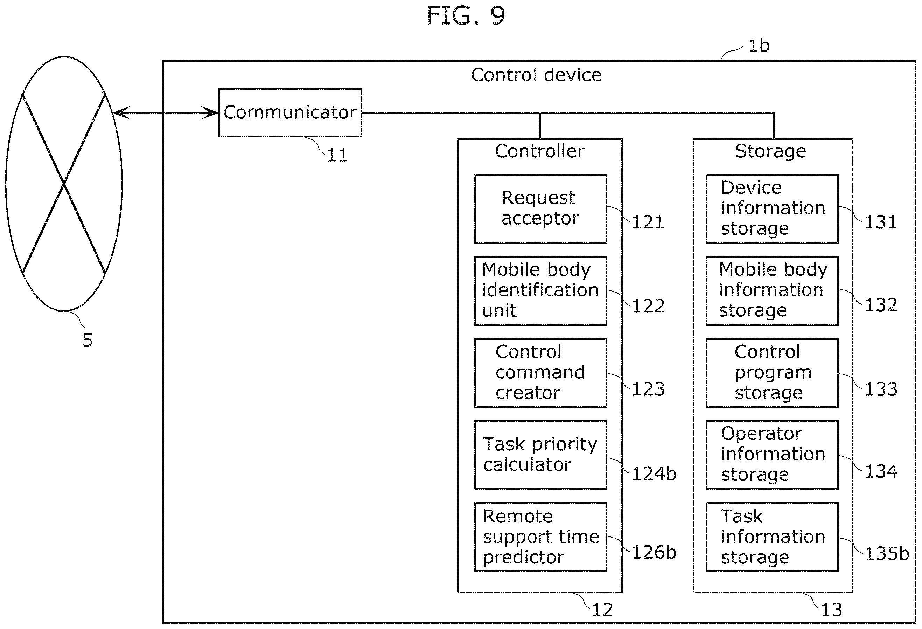

   FIG. 9 is a block diagram illustrating one example of the configuration of a control device according to Variation 2.
[FIG. 10]

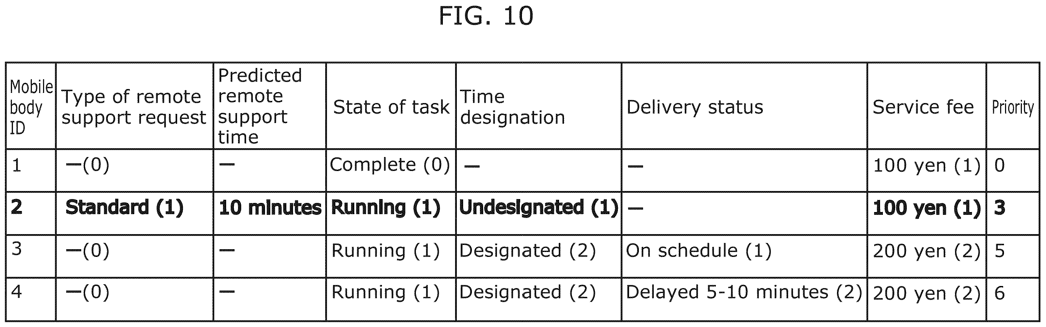

   FIG. 10 is a diagram illustrating one example of task priorities calculated by a task priority calculator according to Variation 2.
[FIG. 11]

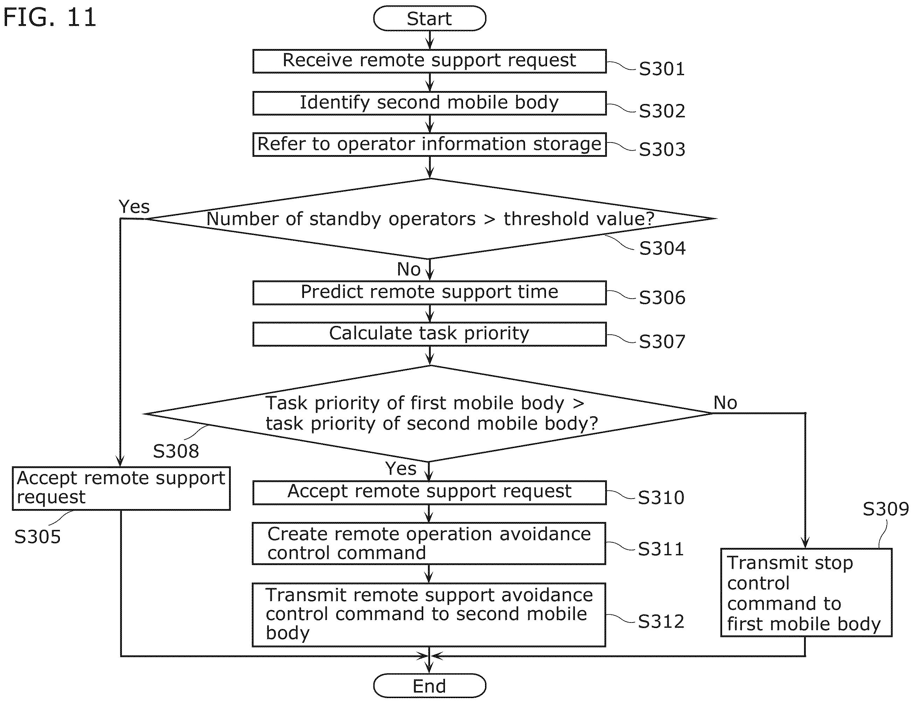

   FIG. 11 is a flowchart illustrating one example of the operation of a control device according to Variation 2.
[FIG. 12]

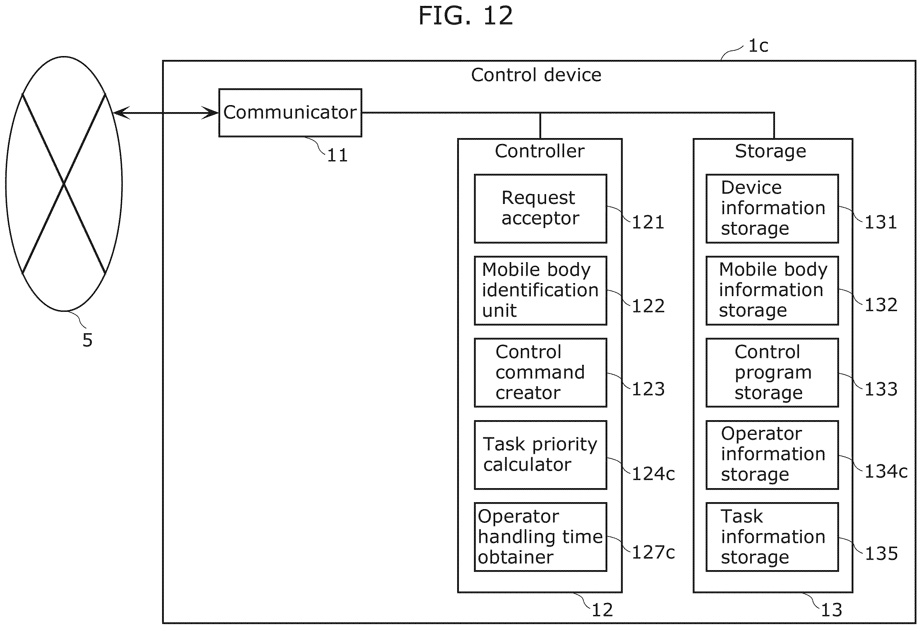

   FIG. 12 is a block diagram illustrating one example of the configuration of a control device according to Variation 3.
[FIG. 13]

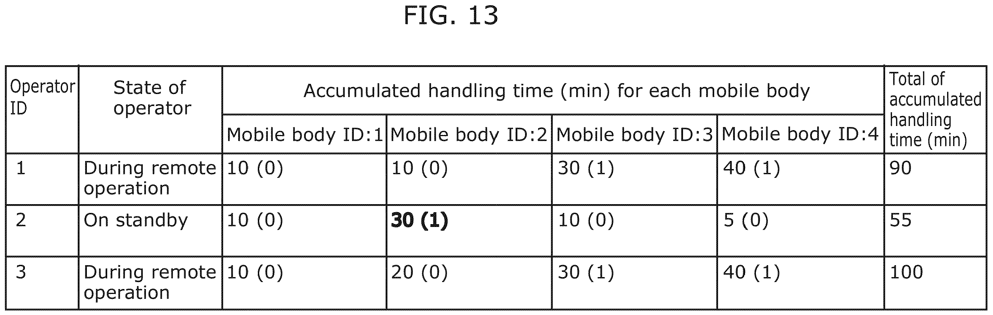

   FIG. 13 is a diagram illustrating one example of an operator information management table according to Variation 3.
[FIG. 14]

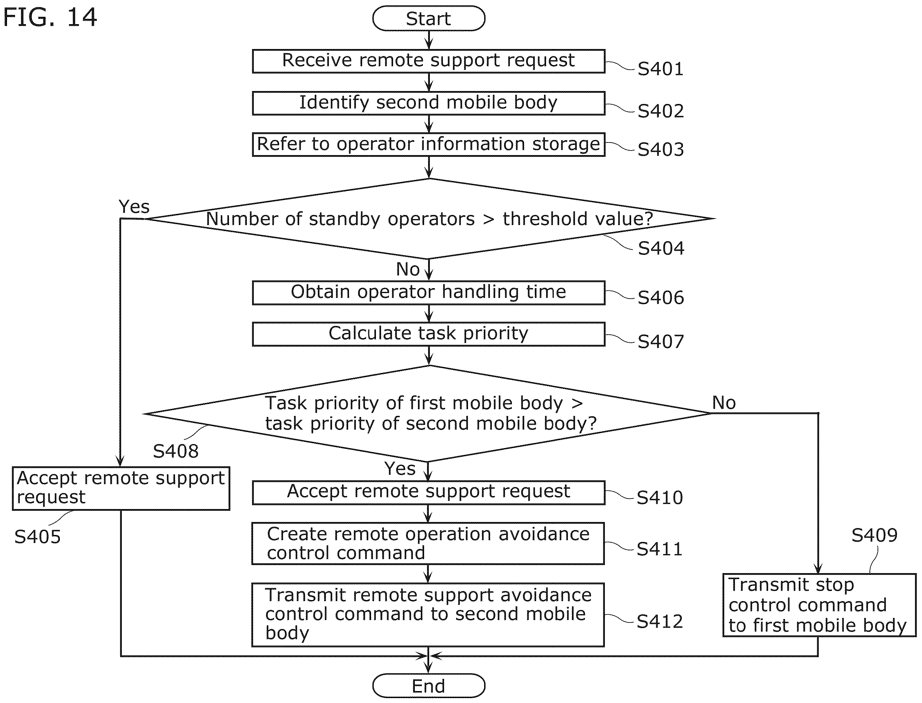

   FIG. 14 is a flowchart illustrating one example of the operation of a control device according to Variation 3.

### [Description of Embodiments]

A control method according to one aspect of the present disclosure is performed by a control device for use in remotely monitoring a plurality of mobile bodies each of which autonomously performs a task, and includes: receiving, from a first mobile body included in the plurality of mobile bodies, a remote support request indicating a request for remote operation support; identifying a second mobile body that is a mobile body different from the first mobile body; obtaining first task information about a first task being performed by the first mobile body and second task information about a second task being performed by the second mobile body; calculating a priority of the first task and a priority of the second task based on the first task information and the second task information, respectively; and when the priority of the first task is lower than the priority of the second task, transmitting, to the first mobile body, a first control command for remotely operating the first mobile body without hindering the second mobile body from performing the second task.

In this manner, when the priority of the first task is lower than the priority of the second task, the first mobile body that has made a remote support request is remotely operated without hindering the second mobile body from performing the second task. Thus, the second mobile body performing the second task can be prioritized, meaning that it is possible to minimize degradation in services that the second mobile body provides through the second task.

Thus, it is possible to provide a control method in which even when there is a mobile body that requires remote operation, degradation in services that the other mobile bodies provide can be minimized.

For example, the first task information includes a type of the remote support request, a state of execution of the first task, information of whether time for the first task has been designated, a status of the first task, and an execution fee for the first task, and the second task information includes the type of the remote support request, a state of execution of the second task, information of whether time for the second task has been designated, a status of the second task, and an execution fee for the second task.

With this, the priority of the first task and the priority of the second task can be more properly calculated using the first task information and the second task information, each of which includes multiple elements.

For example, in the calculating of the priority of the first task, the priority of the first task may be calculated using a point assigned in accordance with a predetermined rule to each of elements that are the type of the remote support request, the state of execution of the first task, the information of whether the time for the first task has been designated, the status of the first task, and the execution fee for the first task, the point including zero, and in the calculating of the priority of the second task, the priority of the second task may be calculated using a point assigned in accordance with the predetermined rule to each of elements that are the type of the remote support request, the state of execution of the second task, the information of whether the time for the second task has been designated, the status of the second task, and the execution fee for the second task, the point including zero.

With this, the priority of the first task and the priority of the second task can be calculated using a point assigned to each of the elements of the first task information and the second task information in accordance with the predetermined rule.

Furthermore, for example, in the calculating of the priority of the first task and the priority of the second task, the priority of the first task and the priority of the second task may be calculated further using a total number of previous remote support requests as the first task information and the second task information.

With this, the priority of the first task and the priority of the second task can be more properly calculated using the first task information and the second task information, each of which includes multiple elements.

For example, the first task information and the second task information may further include a first count and a second count each of which is the total number of previous remote support requests, in the calculating of the priority of the first task, when the first count included in the first task information exceeds a threshold value, the priority of the first task may be calculated using a point assigned in accordance with a predetermined rule to the type of the remote support request, the point including zero, and when the first count included in the first task information is less than or equal to the threshold value, the priority of the first task may be calculated using a point assigned in accordance with the predetermined rule to each of elements that are the type of the remote support request, the state of execution of the first task, the information of whether the time for the first task has been designated, the status of the first task, and the execution fee for the first task, the point including zero, and in the calculating of the priority of the second task, when the second count included in the second task information exceeds a threshold value, the priority of the second task may be calculated using a point assigned in accordance with the predetermined rule to the type of the remote support request, the point including zero, and when the second count included in the second task information is less than or equal to the threshold value, the priority of the second task may be calculated using a point assigned in accordance with the predetermined rule to each of elements that are the type of the remote support request, the state of execution of the second task, the information of whether the time for the second task has been designated, the status of the second task, and the execution fee for the second task, the point including zero.

With this, the priority of the first task and the priority of the second task can be calculated using a point assigned to each of the elements of the first task information and the second task information in accordance with the predetermined rule.

For example, in the calculating of the priority of the first task and the priority of the second task, the priority of the first task and the priority of the second task are calculated further using, as the first task information and the second task information, predicted remote support time that is remote support time predicted from time taken to handle a previous remote support request.

With this, the priority of the first task and the priority of the second task can be more properly calculated using the first task information and the second task information, each of which includes multiple elements.

Furthermore, for example, the first task information and the second task information may further include first predicted remote support time and second predicted remote support time each of which is the remote support time predicted from the time taken to handle the previous remote support request, in the calculating of the priority of the first task, when the first predicted remote support time included in the first task information exceeds a threshold value, the priority of the first task may be calculated using a point assigned in accordance with a predetermined rule to the type of the remote support request, the point including zero, and when the first predicted remote support time included in the first task information is less than or equal to the threshold value, the priority of the first task may be calculated using a point assigned in accordance with the predetermined rule to each of elements that are the type of the remote support request, the state of execution of the first task, the information of whether the time for the first task has been designated, the status of the first task, and the execution fee for the first task, the point including zero, and in the calculating of the priority of the second task, when the second predicted remote support time included in the second task information exceeds a threshold value, the priority of the second task may be calculated using a point assigned in accordance with the predetermined rule to the type of the remote support request, the point including zero, and when the second predicted remote support time included in the second task information is less than or equal to the threshold value, the priority of the second task may be calculated using a point assigned in accordance with the predetermined rule to each of elements that are the type of the remote support request, the state of execution of the second task, the information of whether the time for the second task has been designated, the status of the second task, and the execution fee for the second task, the point including zero.

With this, the priority of the first task and the priority of the second task can be calculated using a point assigned to each of the elements of the first task information and the second task information in accordance with the predetermined rule.

Furthermore, for example, in the calculating of the priority of the first task and the priority of the second task, the priority of the first task and the priority of the second task may be calculated further using operator handling time that is accumulated time taken to handle a previous remote support request in each of the first mobile body and the second mobile body.

With this, the priority of the first task and the priority of the second task can be more properly calculated using the first task information and the second task information, each of which includes multiple elements, and the operator handling time.

Furthermore, for example, in the calculating of the priority of the first task, first operator handling time may be obtained, the first operator handling time being accumulated time taken to handle a previous remote support request, when the first operator handling time obtained exceeds a threshold value, the priority of the first task may be calculated using a point assigned in accordance with a predetermined rule to the first operator handling time, the type of the remote support request, the state of execution of the first task, the information of whether the time for the first task has been designated, the status of the first task, and the execution fee for the first task, the point including zero, and when the first operator handling time obtained is less than or equal to the threshold value, the priority of the first task may be calculated using a point assigned in accordance with the predetermined rule to each of elements that are the type of the remote support request, the state of execution of the first task, the information of whether the time for the first task has been designated, the status of the first task, and the execution fee for the first task, the point including zero, and in the calculating of the priority of the second task, second operator handling time may be obtained, the second operator handling time being accumulated time taken to handle a previous remote support request, when second operator handling time obtained exceeds a threshold value, the priority of the second task may be calculated using a point assigned in accordance with the predetermined rule to each of elements that are the second operator handling time, the type of the remote support request, the state of execution of the second task, the information of whether the time for the second task has been designated, the status of the second task, and the execution fee for the second task, the point including zero, and when the second operator handling time obtained is less than or equal to the threshold value, the priority of the second task may be calculated using a point assigned in accordance with the predetermined rule to each of elements that are the type of the remote support request, the state of execution of the second task, the information of whether the time for the second task has been designated, the status of the second task, and the execution fee for the second task, the point including zero.

With this, the priority of the first task and the priority of the second task can be calculated using a point assigned to the operator handling time and each of the elements of the first task information and the second task information in accordance with the predetermined rule.

For example, the control method may include: when the priority of the first task is higher than the priority of the second task, (i) transmitting, to the first mobile body, a second control command for remote operation that has been created based on the remote support request; and (ii) transmitting, to the second mobile body, a third control command to cause the second mobile body to autonomously perform the second task without hindering control of the first mobile body based on the remote support request.

Furthermore, the control method may further include: before obtaining the first task information and the second task information, determining whether a total number of operators capable of remote operation exceeds a threshold value; and obtaining the first task information and the second task information when the total number of operators is less than or equal to the threshold value.

Furthermore, a control device according to one aspect of the present disclosure is for use in remotely monitoring a plurality of mobile bodies each of which autonomously performs a task, and includes: a request acceptor that receives, from a first mobile body included in the plurality of mobile bodies, a remote support request indicating a request for remote operation support; a mobile body identification unit that identifies a second mobile body that is a mobile body different from the first mobile body; a task priority calculator that obtains first task information about a first task being performed by the first mobile body and second task information about a second task being performed by the second mobile body, and calculates a priority of the first task and a priority of the second task based on the first task information and the second task information, respectively; and a control command creator that when the priority of the first task is lower than the priority of the second task, transmits, to the first mobile body, a first control command for remotely operating the first mobile body without hindering the second mobile body from performing the second task.

Each embodiment described below shows one specific example of the present disclosure. The numerical values, shapes, structural elements, steps, the processing order of the steps etc., shown in the following embodiment are mere examples, and are not intended to limit the present disclosure. Among the structural elements in the following embodiment, structural elements not recited in any one of the independent claims will be described as optional structural elements. In every embodiment, various features can be combined.

### [Embodiment]

Hereinafter, a control method, etc., performed by a control system according to an embodiment will be described with reference to the drawings.

### [1 Configuration of Control System]

FIG. 1 is a block diagram illustrating one example of the configuration of the control system according to the present embodiment.

The control system illustrated in FIG. 1 includes control device 1, a plurality of mobile bodies 21 to 2i, a plurality of remote operation devices 31 to 3j, and a plurality of display devices 41 to 4k (where i, j, and k are any positive integers). Control device 1, the plurality of mobile bodies 21 to 2i, the plurality of remote operation devices 31 to 3j, and the plurality of display devices 41 to 4k are connected so as to be able to communicate with each other via network 5. Note that network 5 is a predetermined wired or wireless communication line such as the Internet or a dedicated line. The following description assumes that the control system includes the plurality of mobile bodies 21 to 2i, the plurality of remote operation devices 31 to 3j, and the plurality of display devices 41 to 4k, but this is not limiting. It is sufficient that the control system include two or more mobile bodies 2i, one or more remote operation devices 3j, and one or more display devices 4k.

### [1.1 Mobile Body 2i]

Each of the plurality of mobile bodies 21 to 2i autonomously performs a task. More specifically, each of the plurality of mobile bodies 21 to 2i is configured to be able to switch between an autonomous mode in which the mobile body autonomously performs a task and a remote operation mode in which the mobile body is remotely operated by one of remote operation devices 31 to 3j and performs a task, for example.

The plurality of mobile bodies 21 to 2i are vehicles or robots, for example, and may be drones.

Examples of the type of the task include a task of a goods delivery service such as home delivery, a task of a passenger transport service such as a taxi service, a task of a work service such as cleaning and waiting on customers, and a task of a heavy machinery operation service. Besides these examples, a task that requires interaction from the remote side or communication from the remote side is also conceivable as an example of the type of the task. Examples of the task include (1) a guard and patrol task that if there is a suspicious individual, may require actions such as remotely calling out to said suspicious individual and remotely checking details with said suspicious individual, (2) a guide task that may require remote conversation in response to inquiries from customers, and (3) a mobile catering task that may require remote interaction with customers in order to make sales or address defects in products.

In the present embodiment, when each of the plurality of mobile bodies 21 to 2i is forced into a situation in which the mobile body cannot autonomously perform a task, the mobile body transmits, to control device 1, a remote support request indicating a request for remote operation support. When the plurality of mobile bodies 21 to 2i receive control commands from remote operation devices 31 to 3j, the plurality of mobile bodies 21 to 2i perform tasks according to said control commands.

The following describes an example in which each of the plurality of mobile bodies 21 to 2i provides a delivery service and is forced into a situation in which the mobile body cannot autonomously perform a task.

For example, assume that while mobile body 2i is traveling on a public road such as a footpath to perform a task of the delivery service, mobile body 2i detects an obstacle such as a dropped object or a plant on a route and stops for safety. In this case, mobile body 2i transmits, to control device 1, a remote support request indicating a request for a remote operator to perform a safety check and a remotely controlled obstacle avoidance operation.

Furthermore, assume, for example, that while mobile body 2i is traveling on a public road such as a footpath or a street to perform a task of the delivery service, mobile body 2i detects a pedestrian, a bicycle, or an automobile approaching. In this case, mobile body 2i transmits, to control device 1, a remote support request indicating a request for a remote operator to perform a safety check (close attention). Note that mobile body 2i may transmit, to control device 1, a remote support request indicating a request for a remote operator to perform a safety check and a remotely controlled operation to prioritize pedestrians. Examples of the operation to prioritize pedestrians include an operation to make a brief stop and speak the phrase "after you" or the like to a pedestrian in order to yield to the pedestrian.

Furthermore, assume, for example, that while mobile body 2i is traveling on a public road such as a footpath to perform a task of the delivery service, mobile body 2i detects a vehicle parked on a street on a route and comes to a stop. In this case, mobile body 2i transmits, to control device 1, a remote support request indicating a request for a remote operator to perform an operation to avoid the vehicle parked on the street.

Furthermore, assume, for example, that while mobile body 2i is traveling on a footpath to perform a task of the delivery service, mobile body 2i crosses a road. In this case, mobile body 2i transmits, to control device 1, a remote support request indicating a request for a remote operator to perform a road crossing operation. This is because there will be a need for prompt action if something happens while mobile body 2i is crossing the road. Examples of the road crossing operation include an operation performed by a remote operator to make a brief stop before crossing, an operation performed by a remote operator to resume the travel after checking the safety in the surrounding area, and an operation performed by a remote operator to ensure the safety in the surrounding area while crossing the road.

Note that in the case where each of the plurality of mobile bodies 21 to 2i autonomously performs a task, the mobile body transmits task information, which is information about the task being performed, to control device 1 via network 5. Details of the task information will be described later.

### [1.2 Display Device 4k]

The plurality of display devices 41 to 4k display video captured by mobile bodies 21 to 2i that are located remotely. When not performing remote operations using the plurality of remote operation devices 31 to 3j, the plurality of remote operators P1 to PI (where I is any positive integer) remotely monitor the states of travel of mobile bodies 21 to 2i that are located remotely, by watching the video of mobile bodies 21 to 2i displayed on display devices 41 to 4k. Note that the number of remote operators P1 to PI is not limited to that in this example and may be one. The remote monitoring does not necessarily need to be performed while watching the video of mobile bodies 21 to 2i; for example, information in which the positions of vehicles are mapped on a map may be displayed for remote monitoring, meaning that any display that allows mobile bodies 21 to 2i to be remotely monitored may be used.

### [1.3 Control Device 1]

FIG. 2 is a block diagram illustrating one example of the configuration of control device 1 illustrated in FIG. 1.

Control device 1 is used to remotely monitor a plurality of mobile bodies, each of which autonomously performs a task. Control device 1 is embodied using a computer including a processor (microprocessor), a memory, and a communication interface, for example. Note that some of the elements of control device 1 may be included in a cloud server and operate therein.

As illustrated in FIG. 2, control device 1 includes communicator 11, control unit 12, and storage 13.

Here, storage 13 is not an essential element; control device 1 does not need to include storage 13.

### [1.3.1 Communicator 11]

Communicator 11 communicates with mobile body 2i, remote operation device 3j, or display device 4k via network 5.

In the present embodiment, communicator 11 receives mobile body information from mobile bodies 21 to 2i and causes storage 13 (specifically, mobile body information storage 132) to store the mobile body information. Furthermore, communicator 11 receives, from remote operation device 3j, identification information for identifying remote operation device 3j itself, and causes storage 13 (specifically, device information storage 131) to store the identification information. Moreover, communicator 11 receives a remote support request from a first mobile body, which is one of mobile bodies 21 to 2i, and outputs the remote support request to controller 12 (specifically, request acceptor 121). In addition, communicator 11 transmits, to mobile body 2i, a control command created by controller 12.

### [1.3.2 Controller 12]

As illustrated in FIG. 2, controller 12 includes request acceptor 121, mobile body identification unit 122, control command creator 123, and task priority calculator 124. For example, controller 12 includes a central processing unit (CPU) or the like and implements the functions of request acceptor 121, mobile body identification unit 122, control command creator 123, and task priority calculator 124 by executing a predetermined control program stored in control program storage 133 of storage 13.

### [1.3.2.1 Request Acceptor 121]

Request acceptor 121 receives, from the first mobile body included in the plurality of mobile bodies, a remote support request indicating a request for remote operation support.

In the present embodiment, request acceptor 121 receives the remote support request from the first mobile body which is one of the plurality of mobile bodies 21 to 2i.

Furthermore, request acceptor 121 causes mobile body information storage 132 of storage 13 to store the identification number of the first mobile body that is subject to remote operation, and notifies mobile body identification unit 122 of the identification number of the first mobile body. Moreover, via communicator 11, request acceptor 121 transmits the identification number of the first mobile body from which the remote support request has been received to a remote operation device that is not being used without working on any requests at that time.

### [1.3.2.2 Mobile Body Identification Unit 122]

Mobile body identification unit 122 identifies a second mobile body which is a mobile body different from the first mobile body.

In the present embodiment, mobile body identification unit 122 identifies the second mobile body which is one or more mobile bodies that are not subject to remote operation among the plurality of mobile bodies 21 to 2i. Specifically, by referring to mobile body information storage 132, mobile body identification unit 122 identifies, as the second mobile body which is not subject to remote operation, a mobile body having an identification number different from the identification number of the first mobile body among the identification numbers of all mobile bodies 21 to 2i.

Mobile body identification unit 122 notifies task priority calculator 124 of the second mobile body identified.

### [1.3.2.3 Task Priority Calculator 124]

Task priority calculator 124 obtains first task information about a first task that is performed by the first mobile body and second task information about a second task that is performed by the second mobile body, and calculates priorities of the first task and the second task on the basis of the first task information and the second task information.

The first task information includes the type of the remote support request, the state of execution of the first task, information of whether time for the first task has been designated, the status of the first task, and the execution fee for the first task. Similarly, the second task information includes the type of the remote support request, the state of execution of the second task, information of whether time for the second task has been designated, the status of the second task, and the execution fee for the second task. Thus, the priority of the first task and the priority of the second task are more properly calculated using the first task information and the second task information, each of which includes multiple elements.

In the present embodiment, before calculating the priority of the task, task priority calculator 124 refers to task information storage 135 of storage 13 and obtains task information to be used to calculate the priority of the task.

The task information includes elements that are information indicating the type of the remote support request, information indicating the state of execution of the task, information indicating whether time for the task has been designated, information indicating the status of the task, and information of an execution fee for a task which is a fee to be paid when the task is executed. Note that in the case where mobile body 2i performs a task of a delivery service, for example, the status of the task is a delivery status when time for the task has been designated.

The information indicating the type of the remote support request indicates that no request has been made, that a standard request has been made, or that an urgent request has been made. The information indicating the state of execution of the task indicates whether the task is running or has been completed. The inforamtion indicating whether time for the task has been designated indicates that time at which the task is to be executed has been designated or that said time has not been designated.

The information indicating the status of the task indicates, when time at which the task is to be executed or completed has been designated, whether the task is executed on schedule, whether there is some time left until the designated time at which the task is to be executed, or if the task is running behind schedule, how far behind the task is. Note that when the status of the task is a delivery status, a requested arrival time corresponds to the designated time.

The inforamtion of the execution fee for a task indicates a fee for a service provided through execution of the task. Note that in the case where mobile body 2i performs a task of a delivery service, the information of the execution fee for the task may indicate that the delivery is a standard delivery or an express delivery or may indicate that the delivery is a standard delivery or a special delivery such as a cold or frozen delivery. In this case, an express delivery or a special delivery is offered at a higher price than a standard delivery.

Furthermore, task priority calculator 124 calculates a priority of the first task using a point including zero that has been assigned in accordance with a predetermined rule to each of the elements that are the type of the remote support request, the state of execution of the first task, the information of whether the time for the first task has been designated, the status of the first task, and the execution fee for the first task. Furthermore, task priority calculator 124 calculates a priority of the second task using a point including zero that has been assigned in accordance with a predetermined rule to each of the elements that are the type of the remote support request, the state of execution of the second task, the information of whether the time for the second task has been designated, the status of the second task, and the execution fee for the second task. Thus, the priority of the first task and the priority of the second task are calculated using a point assigned to each of the elements of the first task information and the second task information in accordance with the predetermined rule.

In the present embodiment, when task priority calculator 124 obtains the task information, task priority calculator 124 calculates the priority of the task on the basis of the obtained task information with reference to a rule that is predetermined for each of the elements of the task information and stored in task information storage 135 in advance.

The following describes one example of a point assigned to each of the elements of the task information with reference to the predetermined rule.

To the type of the remote support request, zero point is assigned when no request is made, one point is assigned when a standard request is made, and 10 points are assigned when an urgent request is made, for example. In this manner, in accordance with the predetermined rule, task priority calculator 124 may assign more points as the level of urgency of the remote support request increases.

To the state of execution of the task, one point is assigned when the task is running, and zero point is assigned when the task has been completed, for example. In this manner, in accordance with the predetermined rule, task priority calculator 124 may assign more points when the task is running than when the task has been completed.

Furthermore, to the task time designation, one point is assigned when time for the task is designated, and zero point is assigned when time for the task is not designated, for example. In this manner, in accordance with the predetermined rule, task priority calculator 124 may assign more points when time at which the task is to be executed is designated than when said time is not designated.

To the status of the task, zero point is assigned when there is some time left, one point is assigned when the task is executed on schedule, two points are assigned when there is a delay of five to 10 minutes, and three points are assigned when there is a delay of more than 10 minutes, for example. In this manner, in accordance with the predetermined rule, task priority calculator 124 may assign more points as the length of delay until execution or completion of the task increases.

To the execution fee (service fee) for a task, one point is assigned when the execution fee is 100 yen, and two points are assigned when the execution fee is 200 yen, for example. Note that in the case where mobile body 2i performs a task of a delivery service, to the execution fee for a task, one point is assigned when the delivery is a standard delivery, and two points are assigned when the delivery is an express delivery or a special delivery, for example. In this manner, in accordance with the predetermined rule, task priority calculator 124 may assign more points as the execution fee increases.

FIG. 3 is a diagram illustrating one example of task priorities calculated by task priority calculator 124 according to the present embodiment. The mobile body with mobile body ID 2 indicated in bold text in FIG. 3 corresponds to the first mobile body, and each of the mobile bodies with mobile body IDs 1, 3, 4 indicated in FIG. 3 corresponds to the second mobile body. The number in parentheses indicated in FIG. 3 indicates a point assigned to each of the elements of the task information.

In the example illustrated in FIG. 3, using the point assigned to each of the elements of the task information, task priority calculator 124 calculates the priority of the task according to (Expression 1) below.Priority = (point assigned to type of remote support request) + (point assigned to state of task) × ((point assigned to time designation) + (point assigned to delivery status) + (point assigned to service fee))

Note that in (Expression 1), (point assigned to state of task) is multiplied so that when the task is completed, the value of the priority becomes small.

In the example illustrated in FIG. 3, task priority calculator 124 determines the priority of the mobile body with mobile body ID 2 as the priority of the first mobile body by calculating 1+1×(1+0+1) = 3 according to (Expression 1) indicated above. Similarly, task priority calculator 124 calculates the priorities of the mobile bodies with mobile body IDs 1, 3, 4 to be 0, 5, 6, respectively, as the priority of the second mobile body, according to (Expression 1) indicated above.

Note that before obtaining the first task information and the second task information, task priority calculator 124 may determine whether the number of standby operators that is the number of remote operators capable of remote operation exceeds a threshold value. When the number of operators is less than or equal to the threshold value, it is sufficient that task priority calculator 124 obtain the first task information and the second task information. On the other hand, when the number of operators exceeds the threshold value, it is sufficient that task priority calculator 124 avoid obtaining the first task information and the second task information and transmit information to that effect to control command creator 123. Note that this threshold value is a positive integer determined in consideration of a safe margin.

### [1.3.2.4 Control Command Creator 123]

When the priority of the first task is lower than the priority of the second task, control command creator 123 creates a first control command to remotely operate the first mobile body without hindering the second mobile body from performing the second task. Control command creator 123 transmits the created first control command to the first mobile body via communicator 11. The first control command is a stop control command to stop the first mobile body, for example, but this is not limiting. The first control command may be a control command to instruct the first mobile body to reduce speed or change course, for example. Furthermore, the first control command may be a control command to instruct remote operation device 3j to remotely operate the first mobile body without hindering the second mobile body from performing the second task.

In this manner, when the remote support request is made, control command creator 123 compares the priority of the first task for the first mobile body and the priority of the second task for the second mobile body that have been calculated by task priority calculator 124. As a result of the comparison, when the priority of the second task is higher, control command creator 123 creates a control command for the first mobile body so as to give priority to the task to be performed by the second mobile body. Subsequently, after completion of the task for the second mobile body, control command creator 123 creates a control command to handle the remote support request from the first mobile body.

On the other hand, when the priority of the first task is higher than the priority of the second task, control command creator 123 creates a second control command for the first mobile body to remotely operate the first mobile body on the basis of the remote support request. Furthermore, control command creator 123 creates a third control command for the second mobile body to cause the second mobile body to autonomously perform the second task without hindering the control of the first mobile body based on the remote support request. Subsequently, control command creator 123 transmits the created second control command to the first mobile body via communicator 11, and transmits the created third control command to the second mobile body via communicator 11. The third control command is a stop control command to stop the second mobile body, for example, but this is not limiting. The third control command may be a control command to avoid a remote support request from the second mobile body. For example, the third control command may be a control command to cause the second mobile body to autonomously perform the second task while avoiding a situation in which the second mobile body requires remote operation, for example, by causing the second mobile body to reduce speed or change course, in order to prioritize the travel of the first mobile body.

In this manner, when the priority of the first task is higher, control command creator 123 creates a control command to handle the remote support request from the first mobile body so as to give priority to the task to be performed by the first mobile body. Furthermore, control command creator 123 creates a control command for the second mobile body to cause the second mobile body to autonomously perform the second task without hindering the first mobile body from performing the task while avoiding a situation in which the second mobile body requires remote operation. It is sufficient that after completion of the task for the first mobile body, control command creator 123 create a control command for the second mobile body to cause the second mobile body to perform the task as usual.

Note that when control command creator 123 obtains, from task priority calculator 124, the information indicating that the number of operators exceeds the threshold value, control command creator 123 only needs to create a control command to handle the remote support request from the first mobile body. This is because there is a sufficient number of remote operators who are capable of remote operation and thus, it is possible to remotely operate the first mobile body in response to the remote support request from the first remote body even while keeping the second mobile body performing the task.

### [1.3.3 Storage 13]

As illustrated in FIG. 2, storage 13 includes device information storage 131, mobile body information storage 132, control program storage 133, operator information storage 134, and task information storage 135. Storage 13, which includes a hard disk drive (HDD), a semiconductor memory, or the like, for example, functions as device information storage 131, mobile body information storage 132, control program storage 133, operator information storage 134, and task information storage 135.

### [1.3.3.1 Device Information Storage 131]

In device information storage 131, the identification numbers of remote operation devices 31 to 3j are stored in advance. As the identification numbers, various information can be used as long as remote operation devices 31 to 3j can be individually identified with the identification numbers. Examples of the identification numbers of remote operation devices 31 to 3j may include the Internet Protocol (IP) addresses of remote operation devices 31 to 3j.

### [1.3.3.2 Mobile Body Information Storage 132]

In mobile body information storage 132, the identification numbers of mobile bodies 21 to 2i are stored in advance as the mobile body information. Examples of the identification numbers of mobile bodies 21 to 2i may include the IP addresses of mobile bodies 21 to 2i.

Furthermore, in mobile body information storage 132, map information about public roads on which mobile bodies 21 to 2i travel may be stored as the mobile body information.

### [1.3.3.3 Control Program Storage 133]

In control program storage 133, a control program to be executed to implement the functions of control device 1 is stored.

### [1.3.3.4 Operator Information Storage 134]

In operator information storage 134, the number of operators that is the number of remote operators is stored. The number of operators is updated as needed.

### [1.3.3.5 Task Information Storage 135]

In task information storage 135, the task information received from mobile bodies 21 to 2i via communicator 11 is stored. The task information, which has been described above in detail, will not be repeatedly described below.

Furthermore, in task information storage 135, the rule predetermined for each of the elements of the task information is stored.

### [1.4 Remote operation device 3j]

FIG. 4 is a block diagram illustrating one example of the configuration of remote operation device 31 illustrated in FIG. 1.

As illustrated in FIG. 4, remote operation device 31 includes communicator 311, output unit 312, input unit 313, controller 314, and storage 315. Note that the configuration of remote operation device 3j is not limited to this example; remote operation device 3j may further include some or all of the functions of control device 1.

Remote operation devices 31 to 3j receive the mobile body information from mobile bodies 21 to 2i and display the mobile body information. Remote operators P1 to PI operate remote operation devices 31 to 3j, and thus remote operation devices 31 to 3j remotely operate mobile bodies 21 to 2i. More specifically, remote operation devices 31 to 3j transmit, to mobile bodies 21 to 2i, control commands for remote operation that have been input by remote operators P1 to PI.

### [1.4.1 Communicator 311]

Communicator 311 communicates with control device 1 and mobile body 2i via network 5. For example, communicator 311 may receive, from mobile body 2i, information about the main unit of mobile body 2i such as travel speed, current location, and steering angle thereof or information indicating the ambient environment of mobile body 2i.

In the present embodiment, communicator 311 receives a control command from control device 1 via network 5 and outputs the control command to controller 314.

Furthermore, when communicator 311 receives, from control device 1 via network 5, a control command indicating a remote operation request based on the remote support request from the first mobile body, communicator 311 may output the control command to output unit 312.

Furthermore, communicator 311 transmits, to mobile body 2i, a control command indicating remote operation such as a travel instruction for the first mobile body that has been input by remote operator PI using input unit 313.

### [1.4.2 Output Unit 312]

Output unit 312, which includes a liquid-crystal display, for example, displays information received from mobile body 2i via communicator 311. For example, output unit 312 may display information about the main unit of mobile body 2i such as travel speed, current location, and steering angle thereof or may display information indicating the ambient environment of mobile body 2i. Note that a known display method can be used as a display method; for example, the information may be displayed on one display at a time or may be displayed each on a different display.

Note that output unit 312 may be used as display devices 41 to 4k; in this case, output unit 312 and display devices 41 to 4k are the same device.

### [1.4.3 Input Unit 313]

Input unit 313, which includes a keyboard, a mouse, a joystick, or the like, for example, is used by one remote operator PI to perform various steering operations. For example, remote operator PI who checks the information displayed on output unit 312 inputs, to input unit 313, an instruction for remotely operating mobile body 2i.

### [1.4.4 Controller 314]

Controller 314, which includes a CPU or the like, for example, performs various controls by executing a remote operation application program stored in storage 315 and controlling communicator 311, output unit 312, input unit 313, etc.

For example, controller 314 reads the identification information of remote operation device 3j from storage 315 and transmits the read identification information to control device 1 via communicator 311.

### [1.4.5 Storage 315]

Storage 315 includes a HDD, a semiconductor memory, or the like, for example.

Storage 315 stores the remote operation application program for remotely operating mobile body 2i, the information received from mobile body 2i, and the information that has been input by remote operator PI, for example.

### [1.5 Operation of Control Device 1]

One example of the operation of control device 1 configured as described above will be described below.

FIG. 5 is a flowchart illustrating one example of the operation of control device 1 according to the present embodiment.

First, assume that the first mobile body which is one of the plurality of mobile bodies 21 to 2i is forced into a situation in which the first mobile body cannot autonomously perform a task, and thus the first mobile body transmits a remote support request to control device 1.

Then, control device 1 receives, from the first mobile body, a remote support request indicating a request for remote operation support (S101). More specifically, communicator 11 of control device 1 receives the remote support request and outputs the remote support request to request acceptor 121.

Next, control device 1 identifies the second mobile body which is a mobile body different from the first mobile body (S102). More specifically, mobile body identification unit 122 of control device 1 refers to mobile body information storage 132, identifies the second mobile body which is not subject to remote operation and is different from the first mobile body among the plurality of mobile bodies 21 to 2i, and notifies control command creator 123 of the second mobile body identified.

Next, control device 1 refers to operator information storage 134 (S103). More specifically, task priority calculator 124 of control device 1 refers to operator information storage 134 and checks the number of standby operators that is the number of remote operators capable of remote operation.

Next, control device 1 determines whether the number of standby operators exceeds the threshold value (S104). More specifically, task priority calculator 124 of control device 1 determines whether the number of standby operators exceeds the threshold value.

When the number of standby operators exceeds the threshold value in Step S104 (Yes in Step 104), control device 1 accepts the remote support request from the first mobile body (S105), and transmits, to remote operation device 3j which is not being used, a control command that instructs remote operation of the first mobile body. More specifically, request acceptor 121 of control device 1 accepts the remote support request from the first mobile body and transmits, via communicator 11 to remote operation device 3j which is not being used, a control command that instructs remote operation of the first mobile body.

On the other hand, when the number of standby operators is less than or equal to the threshold value in Step S104 (No in Step S104), control device 1 calculates the task priorities of the first mobile body and the second mobile body (S106). More specifically, before calculating the task priorities, task priority calculator 124 of control device 1 obtains the first task information of the first mobile body and the second task information of the second mobile body from task information storage 135. Furthermore, with reference to the rule stored in task information storage 135, task priority calculator 124 calculates the task priorities of the first mobile body and the second mobile body on the basis of the first task information and the second task information obtained.

Next, control device 1 determines whether the task priority of the first mobile body is higher than the task priority of the second mobile body (S107). More specifically, control command creator 123 of control device 1 determines whether the task priority of the first mobile body is higher than the task priority of the second mobile body.

When the task priority of the first mobile body is lower than or equal to the task priority of the second mobile body in Step S107 (No in Step S107), control device 1 creates a stop control command for stopping the first mobile body and transmits the created stop control command to the first mobile body (S108). More specifically, control command creator 123 of control device 1 creates a stop control command for stopping the first mobile body and transmits the created stop control command to the first mobile body via communicator 11.

Note that the foregoing indicates that control device 1 creates the stop control command, but this is not limiting. It is sufficient that control device 1 create a control command for the first mobile body that allows the second mobile body to be given priority to perform a task. For example, control device 1 may create a control command to instruct the first mobile body to reduce speed or change course, and transmit the control command to the first mobile body. Furthermore, control device 1 may create a control command to instruct remote operation device 3j to remotely operate the first mobile body without hindering the second mobile body from performing the second task, and transmit the control command to remote operation device 3j.

On the other hand, when the task priority of the first mobile body is higher than the task priority of the second mobile body in Step S107 (Yes in Step S107), control device 1 accepts the remote support request from the first mobile body (S109). More specifically, when the task priority of the first mobile body is higher than the task priority of the second mobile body, request acceptor 121 of control device 1 accepts the remote support request from the first mobile body and transmits, via communicator 11 to remote operation device 3j which is not being used, a control command that instructs remote operation of the first mobile body.

Next, in order to prioritize the travel of the first mobile body, control device 1 creates a control command (a remote operation avoidance control command) that causes the second mobile body to autonomously perform the second task while avoiding a situation in which the second mobile body requires remote operation, such as causing the second mobile body to reduce speed or change course (S110). More specifically, in order to prioritize the travel of the first mobile body, control command creator 123 of control device 1 creates a remote operation avoidance control command that causes the second mobile body to autonomously perform the second task while avoiding a situation in which the second mobile body requires remote operation, such as causing the second mobile body to reduce speed or change course. Note that control device 1 creates, as the remote operation avoidance control command, a stop control command to stop the second mobile body.

Next, control device 1 transmits, to the second mobile body, the remote operation avoidance control command created in Step S110 (S111). More specifically, control command creator 123 of control device 1 transmits the created remote operation avoidance control command to the second mobile body via communicator 11.

### [1.6 Advantageous Effects, etc.]

As described above, with control device 1, etc., according to the present embodiment, when the priority of the first task is lower than the priority of the second task, the first mobile body that has made a remote support request is remotely operated without hindering the second mobile body from performing the second task. Thus, the second mobile body performing the second task can be prioritized, meaning that it is possible to minimize degradation in services that the second mobile body provides through the second task.

Thus, it is possible to provide a control method in which even when there is a mobile body that requires remote operation, degradation in services that the other mobile bodies provide can be minimized.

The first task information includes the type of the remote support request, the state of execution of the first task, information of whether time for the first task has been designated, the status of the first task, and the execution fee for the first task. The second task information includes the type of the remote support request, the state of execution of the second task, information of whether time for the second task has been designated, the status of the second task, and the execution fee for the second task.

With this, the priority of the first task and the priority of the second task can be more properly calculated using the first task information and the second task information, each of which includes multiple elements.

In recent years, for the purpose of solving a shortage of home delivery staff or improving the convenience of home delivery in local areas, delivery services with mobile bodies such as robots that travel on public roads to deliver food and the like have become available. Meanwhile, in order to reduce the cost of operation to remotely monitor the mobile bodies, it is necessary that the remote monitoring be conducted with remote operators less in number than the mobile bodies.

In the case where the remote monitoring is conducted with remote operators less in number than the mobile bodies in this manner, it has been necessary to cause mobile bodies other than the mobile body that is to be remotely operated to stop traveling or reduce speed at the time of remotely operating the mobile body in order to ensure safety. Therefore, even the remote support request from only one mobile body may have caused a delay in a delivery service that is provided by another mobile body that has not made a remote support request.

In such a case, the control method according to the present disclosure can be applied. Specifically, when a remote support request is made, the task priority of the first mobile body to be remotely operated and the task priority of the second mobile body that is not to be remotely operated are compared, and when the task priority of the second mobile body is higher, the task of the second mobile body is given priority; it is sufficient that the remote support request from the first mobile body be responded after completion of the task by the second mobile body. Thus, when the present disclosure is applied, it is possible to maintain the quality of delivery services by preventing a delay in a delivery service that is provided by another mobile body that has not made a remote support request.

### [Variation 1]

The above embodiment has described the task information for use in calculation of the priority of the task as including, as elements, the type of the remote support request, the state of execution of the task, the information of whether the time for the task has been designated, the status of the task, and the execution fee for the task, but this is not limiting. The elements of the task information may further include the number of times the remote support request has been made in the past. This case will be described as Variation 1. Note that the following description will focus on the features different from those described in the above embodiment.

### [2.1 Control Device 1a]

FIG. 6 is a block diagram illustrating one example of the configuration of control device 1a according to Variation 1. Compared to control device 1 illustrated in FIG. 2, control device 1a illustrated in FIG. 6 additionally includes remote support count counter 125a, and includes task priority calculator 124a and task information storage 135a that have different configurations.

### [2.1.1 Remote support count counter 125a]

Remote support count counter 125a counts the number of times each of the plurality of mobile bodies 21 to 2i has made the remote support request. Remote support count counter 125a adds the counted number to the remote support request count stored in task information storage 135a.

In this manner, remote support count counter 125a can count the number of times each of the plurality of mobile bodies 21 to 2i has made the remote support request in the past.

### [2.1.2 Task Priority Calculator 124a]

Similar to the above embodiment, task priority calculator 124a obtains the first task information about the first task that is performed by the first mobile body and the second task information about the second task that is performed by the second mobile body, and calculates priorities of the first task and the second task on the basis of the first task information and the second task information.

In the present variation, at the time of calculating the priority of the first task and the priority of the second task, task priority calculator 124a further uses the number of times the remote support request has been made in the past, as the first task information and the second task information, to calculate the priority of the first task and the priority of the second task.

The first task information further includes a first count that is the number of times the remote support request has been made in the past, in addition to the type of the remote support request, the state of execution of the first task, the information of whether the time for the first task has been designated, the status of the first task, and the execution fee for the first task.

Similarly, the second task information further includes a second count that is the number of times the remote support request has been made in the past, in addition to the type of the remote support request, the state of execution of the second task, the information of whether the time for the second task has been designated, the status of the second task, and the execution fee for the second task.

Thus, task priority calculator 124a can more properly calculate the priority of the first task and the priority of the second task using the first task information and the second task information, each of which includes multiple elements.

In the present variation, before calculating the priority of the task, task priority calculator 124a obtains, from task information storage 135a, the task information for use in calculation of the priority of the task.

The task information includes elements that are information indicating the type of the remote support request, information indicating the state of execution of the task, information indicating whether time for the task has been designated, information indicating the status of the task, information of an execution fee for a task which is a fee to be paid when the task is executed, and information of the number of times the remote support request has been made in the past. The information of the number of times the remote support request has been made in the past indicates the number of times each of the plurality of mobile bodies 21 to 2i has made the remote support request in a predetermined period in the past, that is, a total number of previous remote support requests. The other elements are as described above and thus description thereof will be omitted.

In the present variation, when task priority calculator 124a obtains the task information, task priority calculator 124a calculates the priority of the task on the basis of the obtained task information with reference to a rule that is predetermined for each of the elements of the task information and stored in task information storage 135a in advance.

More specifically, at the time of calculating the priority of the first task, when the first count included in the first task information exceeds a threshold value, task priority calculator 124a calculates the priority of the first task using a point including zero that has been assigned to the type of the remote support request in accordance with the predetermined rule. On the other hand, when the first count is less than or equal to the threshold value, task priority calculator 124a calculates the priority of the first task using a point including zero that has been assigned to each of the elements other than the first count in accordance with the predetermined rule. The elements other than the first count are the type of the remote support request, the state of execution of the first task, the information of whether the time for the first task has been designated, the status of the first task, and the execution fee for the first task.

Similarly, at the time of calculating the priority of the second task, when the second count included in the second task information exceeds a threshold value, task priority calculator 124a calculates the priority of the second task using a point including zero that has been assigned in accordance with the rule predetermined for the type of the remote support request. On the other hand, when the second count is less than or equal to the threshold value, task priority calculator 124a calculates the priority of the second task using a point including zero that has been assigned to each of the elements other than the second count in accordance with the predetermined rule. The elements other than the second count are the type of the remote support request, the state of execution of the second task, the information of whether the time for the second task has been designated, the status of the second task, and the execution fee for the second task.

FIG. 7 is a diagram illustrating one example of task priorities calculated by task priority calculator 124a according to Variation 1. Note that the table illustrated in FIG. 7 is the same as the table illustrated in FIG. 3 except that the remote support request count has been added as an element of the task information. The mobile body with mobile body ID 2 indicated in bold text in FIG. 7 corresponds to the first mobile body, and each of the mobile bodies with mobile body IDs 1, 3, 4 indicated in FIG. 7 corresponds to the second mobile body. The number in parentheses indicated in FIG. 7 indicates a point assigned to each of the elements of the task information.

In the example illustrated in FIG. 7, using the point assigned to each of the elements of the task information, task priority calculator 124a calculates the priority of the task according to (Expression 2) below.When remote support request count > threshold value, priority = (point assigned to type of remote support request) When remote support request count ≤ threshold value, priority = (point assigned to type of remote support request) + (point assigned to state of task) × ((point assigned to time designation) + (point assigned to delivery status) + (point assigned to service fee))

Note that (Expression 2) is set so that the value of the priority becomes small when the remote support request count is greater than the threshold value that is, for example, 3. Note that even when the remote support request count is greater than the threshold value that is, for example, 3, the priority is calculated in consideration of (point assigned to type of remote support request) alone, in order to handle an urgent request.

In the example illustrated in FIG. 7, task priority calculator 124a calculates the priority of the mobile body with the mobile body ID 2 to be 3, as the priority of the first mobile body, according to (Expression 2) indicated above, because the remote support request count is greater than the threshold value that is 3. Similarly, task priority calculator 124a calculates the priorities of the mobile bodies with mobile body IDs 1, 3, 4 to be 0, 5, 6, respectively, as the priority of the second mobile body, according to (Expression 2) indicated above.

Note that as in the above embodiment, before obtaining the first task information and the second task information, task priority calculator 124a may determine whether the number of standby operators that is the number of remote operators capable of remote operation exceeds a threshold value. This case is also as described above and thus, description thereof will be omitted.

### [2.1.3 Task Information Storage 135a]

Task information storage 135a stores the task information obtained by task priority calculator 124a. In the present variation, the number of remote support requests counted by remote support count counter 125a is further stored in task information storage 135a.

Furthermore, in task information storage 135a, the rule predetermined for each of the elements of the task information is stored as described above.

### [2.2 Operation of Control Device 1a]

One example of the operation of control device 1a configured as described above will be described below.

FIG. 8 is a flowchart illustrating one example of the operation of control device 1a according to Variation 1. In Step S201 to Step S205 and Step S208 to Step S212 illustrated in FIG. 8, processes that are substantially the same as the processes performed in Step S101 to Step S105 and Step S107 to Step S111 illustrated in FIG. 5 are performed and thus, description of these steps will be omitted.

When the number of standby operators is less than or equal to a threshold value in Step S204 (No in Step S204), control device 1a obtains the remote support request count (S206). More specifically, task priority calculator 124a of control device 1a obtains, as the first task information of the first mobile body and the second task information of the second mobile body, the first count that is the number of remote support requests from the first mobile body that has been stored in task information storage 135a and the second count that is the number of remote support requests from the second mobile body that has been stored in task information storage 135a.

Next, control device 1a calculates the task priorities of the first mobile body and the second mobile body (S207). More specifically, before calculating the task priorities, task priority calculator 124a of control device 1a further obtains the first task information of the first mobile body and the second task information of the second mobile body. Note that the first task information further obtained includes the type of the remote support request, the state of execution of the first task, the information of whether the time for the first task has been designated, the status of the first task, and the execution fee for the first task. Similarly, the second task information further obtained includes the type of the remote support request, the state of execution of the second task, the information of whether the time for the second task has been designated, the status of the second task, and the execution fee for the second task. Subsequently, using the rule stored in task information storage 135 and (Expression 2) indicated above, task priority calculator 124a calculates the task priorities of the first mobile body and the second mobile body from the first task information and the second task information that include the first count and the second count.

In this manner, task priority calculator 124a can calculate the priority of the first task and the priority of the second task using a point assigned to each of the elements of the first task information and the second task information in accordance with the predetermined rule.

### [2.3 Advantageous Effects, etc.]

As described above, the number of times the remote support request has been made in the past is further included as an element of the task information according to the present variation. With this, control device 1a, etc., according to the present variation can more properly calculate the priority of the first task and the priority of the second task using the first task information and the second task information, each of which includes multiple elements.

As described above, with control device 1a, etc., according to the present variation, when the priority of the first task is lower than the priority of the second task, the first mobile body that has made a remote support request is remotely operated without hindering the second mobile body from performing the second task. Thus, the second mobile body performing the second task can be prioritized, meaning that it is possible to minimize degradation in services that the second mobile body provides through the second task.

Thus, it is possible to provide a control method in which even when there is a mobile body that requires remote operation, degradation in services that the other mobile bodies provide can be minimized.

### [Variation 2]

Variation 1 has described the case where the number of times the remote support request has been made in the past is further included as an element of the task information in addition to the elements according to the above embodiment, but this is not limiting. Predicted remote support time that is remote support time predicted from time taken to handle a previous remote support request may further be included as an element of the task information in addition to the elements according to the above embodiment. This case will be described as Variation 2. Note that the following description will focus on the features different from those described in the above embodiment and Variation 1.

### [3.1 Control Device 1b]

FIG. 9 is a block diagram illustrating one example of the configuration of control device 1b according to Variation 2. Compared to control device 1 illustrated in FIG. 2, control device 1b illustrated in FIG. 9 additionally includes remote support time predictor 126b, and includes task priority calculator 124b and task information storage 135b that have different configurations.

### [3.1.1 Remote Support Time Predictor 126b]

Remote support time predictor 126b accumulates time taken to handle previous remote support requests in each of the plurality of mobile bodies 21 to 2i, and causes task information storage 135b to store the accumulated time. More specifically, remote support time predictor 126b adds, to the accumulated time stored in task information storage 135b, time taken to handle a remote support request in each of the plurality of mobile bodies 21 to 2i.

Furthermore, using the accumulated time stored in task information storage 135b, remote support time predictor 126b calculates a statistic such as the mean and thus predicts remote support time as predicted remote support time on the basis of the calculated statistic from the time taken to handle previous remote support requests. Remote support time predictor 126b causes task information storage 135b to store the predicted remote support time.

In this manner, remote support time predictor 126b can cause task information storage 135b to store, as one element of the task information, the precited remote support time that is remote support time predicted from the time taken to handle previous remote support requests.

Note that at the time of calculation of the priority of a task by task priority calculator 124b, remote support time predictor 126b may notify task priority calculator 124b of the predicted remote support time that is remote support time predicted using the accumulated time stored in task information storage 135b.

### [3.1.2 Task Priority Calculator 124b]

Similar to the above embodiment, task priority calculator 124b obtains the first task information about the first task that is performed by the first mobile body and the second task information about the second task that is performed by the second mobile body, and calculates priorities of the first task and the second task on the basis of the first task information and the second task information.

In the present variation, at the time of calculating the priority of the first task and the priority of the second task, task priority calculator 124b further uses the predicted remote support time as the first task information and the second task information, to calculate the priority of the first task and the priority of the second task.

The first task information further includes first predicted remote support time that is remote support time predicted from time taken to handle previous remote support requests, in addition to the type of the remote support request, the state of execution of the first task, the information of whether the time for the first task has been designated, the status of the first task, and the execution fee for the first task.

Similarly, the second task information further includes second predicted remote support time that is remote support time predicted from the time taken to handle previous remote support requests, in addition to the type of the remote support request, the state of execution of the second task, the information of whether the time for the second task has been designated, the status of the second task, and the execution fee for the second task.

In the present variation, before calculating the priority of the task, task priority calculator 124b obtains, from task information storage 135b, the task information for use in calculation of the priority of the task.

The task information includes elements that are information indicating the type of the remote support request, information indicating the state of execution of the task, information indicating whether time for the task has been designated, information indicating the status of the task, information of the execution fee for the task which is a fee to be paid when the task is executed, and information of the predicted remote support time. The information of the predicted remote support time indicates remote support time predicted by calculating a statistic from the accumulated time taken to handle the remote support requests for the plurality of mobile bodies 21 to 2i in a predetermined period in the past. The other elements are as described above and thus description thereof will be omitted.

In the present variation, when task priority calculator 124b obtains the task information, task priority calculator 124b calculates the priority of the task on the basis of the obtained task information with reference to a rule that is predetermined for each of the elements of the task information and stored in task information storage 135b in advance.

More specifically, at the time of calculating the priority of the first task, when the first predicted remote support time included in the first task information exceeds a threshold value, task priority calculator 124b calculates the priority of the first task using a point including zero that has been assigned to the type of the remote support request in accordance with the predetermined rule. On the other hand, when the first predicted remote support time is less than or equal to the threshold value, task priority calculator 124b calculates the priority of the first task using a point including zero that has been assigned to each of the elements other than the first predicted remote support time in accordance with the predetermined rule. The elements other than the first predicted remote support time are the type of the remote support request, the state of execution of the first task, the information of whether the time for the first task has been designated, the status of the first task, and the execution fee for the first task.

Similarly, at the time of calculating the priority of the second task, when the second predicted remote support time included in the second task information exceeds a threshold value, task priority calculator 124b calculates the priority of the second task using a point including zero that has been assigned to the type of the remote support request in accordance with the predetermined rule. On the other hand, when the second predicted remote support time is less than or equal to the threshold value, task priority calculator 124b calculates the priority of the second task using a point including zero that has been assigned to each of the elements other than the second predicted remote support time in accordance with the predetermined rule. The elements other than the second predicted remote support time are the type of the remote support request, the state of execution of the second task, the information of whether the time for the second task has been designated, the status of the second task, and the execution fee for the second task.

FIG. 10 is a diagram illustrating one example of task priorities calculated by task priority calculator 124b according to Variation 2. Note that the table illustrated in FIG. 10 is the same as the table illustrated in FIG. 3 except that the predicted remote support time has been added as an element of the task information. The mobile body with mobile body ID 2 indicated in bold text in FIG. 10 corresponds to the first mobile body, and each of the mobile bodies with mobile body IDs 1, 3, 4 indicated in FIG. 10 corresponds to the second mobile body. The number in parentheses indicated in FIG. 10 indicates a point assigned to each of the elements of the task information.

In the example illustrated in FIG. 10, using the point assigned to each of the elements of the task information, task priority calculator 124b calculates the priority of the task according to (Expression 3) below.When predicted remote support time > threshold value, priority = (point assigned to type of remote support request) When predicted remote support time ≤ threshold value, priority = (point assigned to type of remote support request) + (point assigned to state of task) × ((point assigned to time designation) + (point assigned to delivery status) + (point assigned to service fee))

Note that (Expression 3) is set so that the value of the priority becomes small when the predicted remote support time is greater than the threshold value that is, for example, 3 minutes. Note that even when the predicted remote support time is greater than the threshold value that is, for example, 3 minutes, the priority is calculated in consideration of (point assigned to type of remote support request) alone, in order to handle an urgent request.

In the example illustrated in FIG. 10, task priority calculator 124b calculates the priority of the mobile body with the mobile body ID 2 to be 3, as the priority of the first mobile body, according to (Expression 3) indicated above, because the predicted remote support time is greater than the threshold value that is 3 minutes. Similarly, task priority calculator 124b calculates the priorities of the mobile bodies with mobile body IDs 1, 3, 4 to be 0, 5, 6, respectively, as the priority of the second mobile body, according to (Expression 3) indicated above.

Note that as in the above embodiment, before obtaining the first task information and the second task information, task priority calculator 124b may determine whether the number of standby operators that is the number of remote operators capable of remote operation exceeds a threshold value. This case is also as described above and thus, description thereof will be omitted.

### [3.1.3 Task Information Storage 135b]

Task information storage 135b stores the task information obtained by task priority calculator 124b. In the present variation, the predicted remote support time that is remote support time predicted by remote support time predictor 126b from the time taken to handle previous remote support requests is further stored in task information storage 135b.

Furthermore, in task information storage 135b, the rule predetermined for each of the elements of the task information is stored as described above.

### [3.2 Operation of Control Device 1b]

One example of the operation of control device 1b configured as described above will be described below.

FIG. 11 is a flowchart illustrating one example of the operation of control device 1b according to Variation 2. In Step S301 to Step S305 and Step S308 to Step S312 illustrated in FIG. 11, processes that are substantially the same as the processes performed in Step S101 to Step S105 and Step S107 to Step S111 illustrated in FIG. 5 are performed and thus, description of these steps will be omitted.

When the number of standby operators is less than or equal to a threshold value in Step S304 (No in Step S304), control device 1b obtains the predicted remote support time (S306). More specifically, task priority calculator 124b of control device 1 obtains, as the first task information of the first mobile body and the second task information of the second mobile body, the first predicted remote support time and the second predicted remote support time that are the predicted remote support time for the first mobile body and the predicted remote support time for the second mobile time stored in task information storage 135b.

Note that task priority calculator 124b may obtain the predicted remote support time that is remote support time predicted by remote support time predictor 126b using the accumulated time stored in task information storage 135b.

Next, control device 1b calculates the task priorities of the first mobile body and the second mobile body (S307). More specifically, before calculating the task priorities, task priority calculator 124b of control device 1 further obtains the first task information of the first mobile body and the second task information of the second mobile body. Note that similar to Variation 1, the first task information further obtained includes the type of the remote support request, the state of execution of the first task, the information of whether the time for the first task has been designated, the status of the first task, and the execution fee for the first task. Moreover, similar to Variation 1, the second task information further obtained includes the type of the remote support request, the state of execution of the second task, the information of whether the time for the second task has been designated, the status of the second task, and the execution fee for the second task. Subsequently, using the rule stored in task information storage 135b and (Expression 3) indicated above, task priority calculator 124b calculates the task priorities of the first mobile body and the second mobile body from the first task information and the second task information that include the first predicted remote support time and the second predicted remote support time.

In this manner, task priority calculator 124b can calculate the priority of the first task and the priority of the second task using a point assigned to each of the elements of the first task information and the second task information in accordance with the predetermined rule.

### [3.3 Advantageous Effects, etc.]

As described above, the predicted remote support time is further included as an element of the task information according to the present variation. With this, control device 1b, etc., according to the present variation can more properly calculate the priority of the first task and the priority of the second task using the first task information and the second task information, each of which includes multiple elements.

Furthermore, with control device 1b, etc., according to the present variation, when the priority of the first task is lower than the priority of the second task, the first mobile body that has made a remote support request is remotely operated without hindering the second mobile body from performing the second task. Thus, the second mobile body performing the second task can be prioritized, meaning that it is possible to minimize degradation in services that the second mobile body provides through the second task.

Thus, it is possible to provide a control method in which even when there is a mobile body that requires remote operation, degradation in services that the other mobile bodies provide can be minimized.

### [Variation 3]

Variation 2 has described the case where the predicted remote support time is further included in the elements of the task information in addition to the elements according to the above embodiment, but this is not limiting. In addition to the task information, operator handling time that is the accumulated time taken to handle previous remote support requests from the mobile bodies that has been calculated for each operator who is a remote operator may further be used in task priority calculation. This case will be described as Variation 3. Note that the following description will focus on the features different from those described in the above embodiment and Variations 1, 2.

### [4.1 Control Device 1c]

FIG. 12 is a block diagram illustrating one example of the configuration of control device 1c according to Variation 3. Compared to control device 1 illustrated in FIG. 2, control device 1c illustrated in FIG. 12 additionally includes operator handling time obtainer 127c, and includes task priority calculator 124c and operator information storage 134c that have different configurations.

### [4.1.1 Operator Handling Time Obtainer 127c]

Operator handling time obtainer 127c accumulates, for each operator, time taken to handle previous remote support requests in each of the plurality of mobile bodies 21 to 2i, and causes operator information storage 134c to store the accumulated time. More specifically, operator handling time obtainer 127c obtains, for each operator, time taken to handle remote support requests in each of the plurality of mobile bodies 21 to 2i. Operator handling time obtainer 127c adds said obtained time to the accumulated time of each operator for each of the plurality of mobile bodies 21 to 2i that has been stored in operator information storage 134c.

In this manner, operator handling time obtainer 127c can cause operator information storage 134c to store the operator handling time of each operator for each of the plurality of mobile bodies 21 to 2i.

Note that operator handling time obtainer 127c may store the operator handling time into operator information storage 134c by updating a corresponding managed portion of an operator information management table stored in operator information storage 134c.

Furthermore, at the time of calculation of the priority of a task by task priority calculator 124c, operator handling time obtainer 127c may notify task priority calculator 124c of the operator handling time stored in operator information storage 134c.

### [4.1.2 Task Priority Calculator 124c]

Similar to the above embodiment, task priority calculator 124c obtains the first task information about the first task that is performed by the first mobile body and the second task information about the second task that is performed by the second mobile body, and calculates priorities of the first task and the second task on the basis of the first task information and the second task information.

In the present variation, at the time of calculating the priority of the first task and the priority of the second task, task priority calculator 124c further uses the operator handling time in addition to the first task information and the second task information, to calculate the priority of the first task and the priority of the second task. The operator handling time is the time taken to handle previous remote support requests in each of the first mobile body and the second mobile body.

As described in the above embodiment, the first task information includes the type of the remote support request, the state of execution of the first task, the information of whether the time for the first task has been designated, the status of the first task, and the execution fee for the first task. As described in the above embodiment, the second task information includes the type of the remote support request, the state of execution of the second task, the information of whether the time for the second task has been designated, the status of the second task, and the execution fee for the second task.

In the present variation, before calculating the priority of the task, task priority calculator 124c obtains the operator handling time of a standby operator (remote operator) from operator information storage 134c, and obtains the task information from task information storage 135b. Note that the task information is as described in the above embodiment and thus, description thereof will be omitted.

Furthermore, in the present variation, when task priority calculator 124c obtains the operator handling time and the task information, task priority calculator 124c calculates the priority of the task with reference to the rule stored in task information storage 135c in advance and predetermined for the operator handling time and each of the elements of the task information.

More specifically, at the time of calculating the priority of the first task, task priority calculator 124c obtains first operator handling time which is accumulated time taken to handle previous remote support requests. When the first operator handling time obtained exceeds a threshold value, task priority calculator 124c calculates the priority of the first task using a point including zero that has been assigned to the first operator handling time and each of the elements of the first task information in accordance with the predetermined rule.

On the other hand, when the first operator handling time is less than or equal to the threshold value, task priority calculator 124c calculates the priority of the first task using a point including zero that has been assigned to each of the elements of the first task information in accordance with the predetermined rule.

Similarly, at the time of calculating the priority of the second task, task priority calculator 124c obtains second operator handling time which is accumulated time taken to handle previous remote support requests. When the second operator handling time obtained exceeds a threshold value, task priority calculator 124c calculates the priority of the second task using a point including zero that has been assigned to the second operator handling time and each of the elements of the second task information in accordance with the predetermined rule. On the other hand, when the second operator handling time is less than or equal to the threshold value, task priority calculator 124c calculates the priority of the second task using a point including zero that has been assigned to each of the elements of the second task information in accordance with the predetermined rule.

FIG. 13 is a diagram illustrating one example of an operator information management table according to Variation 3. Note that the operator information management table illustrated in FIG. 13 is stored in operator information storage 134c. In FIG. 13, the mobile body with mobile body ID 2 corresponds to the first mobile body, and each of the mobile bodies with mobile body IDs 1 and 3 corresponds to the second mobile body. Furthermore, in FIG. 13, the operator with operator ID 2 corresponds to a remote operator who is capable of remote operation when a remote support request is made. The number in parentheses indicated in FIG. 13 indicates a point assigned to each of the elements of the task information at the time of task priority calculation.

In the example illustrated in FIG. 13, task priority calculator 124c obtains the operator handling time of a standby operator with operator ID 2 for each mobile body. Subsequently, using the points assigned to the obtained operator handling time of the standby operator and each of the elements of the task information, task priority calculator 124b calculates the priority of the task according to (Expression 4) below.When operator handling time for target mobile body > threshold value, priority = (point assigned to operator handling time) + (point assigned to type of remote support request) + (point assigned to state of task) × ((point assigned to time designation) + (point assigned to delivery status) + (point assigned to service fee)) When operator handling time for target mobile body ≤ threshold value, priority = (point assigned to type of remote support request) + (point assigned to state of task) × ((point assigned to time designation) + (point assigned to delivery status) + (point assigned to service fee))

Note that (Expression 4) is set so that the value of the priority becomes large when the operator handling time for the target mobile body is greater than the threshold value that is, for example, 10 minutes. This is because it is considered that an operator whose operator handling time for the target mobile body is long will finish handling the remote support request early.

Next, a point that is assigned to the operator handling time with reference to the predetermined rule will be described.

For example, zero point is assigned when the operator handling time is zero minutes to 29 minutes, 1 point is assigned when the operator handling time is 30 minutes to 59 minutes, and two points are assigned when the operator handling time is greater than or equal to 60 minutes. In this manner, in accordance with the predetermined rule, task priority calculator 124c assigns more points as the level of skill of the operator increases.

Note that while the operator handling time is cited as an example in the present variation as described with reference to FIG. 13, etc., this is not limiting. An operator handling count that is the accumulated number of handling times needed for previous remote support requests may be used. In this case, it is sufficient that zero point be assigned when the operator handling count is zero time to nine times, one point be assigned when the operator handling count is 10 times to 19 times, and two points be assigned when the operator handing count is greater than or equal to 20 times.

Furthermore, as in the above embodiment, before obtaining the first task information and the second task information, task priority calculator 124c may determine whether the number of standby operators that is the number of remote operators capable of remote operation exceeds a threshold value. This case is also as described above and thus, description thereof will be omitted.

### [4.1.3 Operator Information Storage 134c]

In operator information storage 134c, the number of operators that is the number of remote operators is stored.

In the present variation, operator information storage 134c further stores the operator handling time of each operator for each of the first mobile body and the second mobile body that is time accumulated by operator handling time obtainer 127c.

### [4.2 Operation of Control Device 1c]

One example of the operation of control device 1c configured as described above will be described.

FIG. 14 is a flowchart illustrating one example of the operation of control device 1c according to Variation 3. In Step S401 to Step S405 and Step S408 to Step S412 illustrated in FIG. 14, processes that are substantially the same as the processes performed in Step S101 to Step S105 and Step S107 to Step S111 illustrated in FIG. 5 are performed and thus, description of these steps will be omitted.

When the number of standby operators is less than or equal to a threshold value in Step S404 (No in Step S404), control device 1c obtains the operator handling time (S406). More specifically, task priority calculator 124c of control device 1 obtains the operator handling time stored in operator information storage 134c.

Note that task priority calculator 124c may obtain the operator handling time by operator handling time obtainer 127c notifying task priority calculator 124c of the operator handling time obtained from operator information storage 134c.

Next, control device 1c calculates the task priorities of the first mobile body and the second mobile body (S407). More specifically, before calculating the task priorities, task priority calculator 124c of control device 1c obtains the first task information of the first mobile body and the second task information of the second mobile body. Note that, similar to Embodiment 1 described above, the first task information obtained includes the type of the remote support request, the state of execution of the first task, the information of whether the time for the first task has been designated, the status of the first task, and the execution fee for the first task. Moreover, similar to Embodiment 1 described above, the second task information obtained includes the type of the remote support request, the state of execution of the second task, the information of whether the time for the second task has been designated, the status of the second task, and the execution fee for the second task. Subsequently, using the rule stored in task information storage 135c and (Expression 4) indicated above, task priority calculator 124c calculates the task priorities of the first mobile body and the second mobile body from the operator handling time, the first task information, and the second task information.

In this manner, task priority calculator 124c can calculate the priority of the first task and the priority of the second task using a point assigned to the operator handling time and each of the elements of the first task information and the second task information in accordance with the predetermined rule.

### [4.3 Advantageous Effects, etc.]

As described above, control device 1c, etc., according to the present variation calculates the priority of the first task and the priority of the second task using the first task information and the second task information, each of which includes multiple elements, and the operator handling time.

Furthermore, with control device 1c, etc., according to the present variation, when the priority of the first task is lower than the priority of the second task, the first mobile body that has made a remote support request is remotely operated without hindering the second mobile body from performing the second task. Thus, the second mobile body performing the second task can be prioritized, meaning that it is possible to minimize degradation in services that the second mobile body provides through the second task.

Thus, it is possible to provide a control method in which even when there is a mobile body that requires remote operation, degradation in services that the other mobile bodies provide can be minimized.

### [Other Possible Embodiments]

While the control device and the control method according to the present disclosure have been described thus far in the embodiment, subjects, devices, and the like in which the processes are performed are not limited to specific ones.

Note that the present disclosure is not limited to the above-described embodiment. For example, other embodiments that can be realized by arbitrarily combining or removing structural elements described in the present specification may also be embodiments of the present disclosure. Furthermore, variations obtainable through various changes to the above-described embodiment that can be conceived by a person having ordinary skill in the art without departing from the essence of the present disclosure, that is, the meaning of the recitations in the claims, are also included in the present disclosure.

Furthermore, the present disclosure includes the following cases.

(1) The above-described device is specifically a computer system configured from a microprocessor, a read only memory (ROM), a random access memory (RAM), a hard disk unit, a display unit, a keyboard, and a mouse, for example. A computer program is stored in the RAM or the hard disk unit. Each device achieves its function as a result of the microprocessor operating according to the computer program. Here, the computer program is configured of a combination of command codes indicating instructions to the computer in order to achieve a predetermined function.
(2) Some or all of the structural elements included in the above-described device may be configured from a single system Large Scale Integration (LSI). A system LSI is a super-multifunction LSI manufactured with a plurality of components integrated on a single chip, and is specifically a computer system configured of a microprocessor, a ROM, and a RAM, for example. A computer program is stored in the RAM. The system LSI achieves its function as a result of the microprocessor operating according to the computer program.
(3) Some or all of the structural elements included in the above-described device may each be configured from an IC card that is detachably attached to each device or a stand-alone module. The IC card or the module is a computer system made up of a microprocessor, a ROM, a RAM, and so on. The IC card or the module may include the aforementioned super multifunctional LSI. The IC card and the module achieve their functions as a result of the microprocessor operating according to the computer program. The IC card and the module may be tamperproof.
(4) Moreover, the present disclosure may be the method described above. Furthermore, the present disclosure may be a computer program for implementing these methods using a computer or may be a digital signal of the computer program.
(5) Moreover, the present disclosure may be the aforementioned computer program or digital signal recorded on recording media readable by a computer, such as a flexible disk, a hard disk, a compact disc read-only memory (CD-ROM), a magneto-optical disc (MO), a digital versatile disc (DVD), a DVD-ROM, a DVD-RAM, a Blu-ray (registered trademark) disc (BD), or a semiconductor memory, for example. The present disclosure may also be the digital signal recorded on these recoding media.

Furthermore, the present disclosure may be the aforementioned computer program or digital signal transmitted via a telecommunication line, a wireless or wired communication line, a network represented by the Internet, data broadcasting, or the like.

Furthermore, the present disclosure may be a computer system including a microprocessor and a memory. The memory may have the computer program stored therein, and the microprocessor may operate according to the computer program.

Moreover, by transferring the recording medium having the aforementioned program or digital signal recorded thereon or by transferring the aforementioned program or digital signal via the aforementioned network or the like, the present disclosure may be implemented by a different independent computer system.

### [Industrial Applicability]

The present disclosure can be used for a control method, a control device, and a program, and can be used particularly for: a control method performed by a control device for use in remotely monitoring a plurality of mobile bodies used for delivery services, etc., with mobile bodies such as robots that travel on public roads to deliver food and the like; the control device; and a program.

### [Reference Signs List]

1, 1a, 1b, 1c control device
5 network
11, 311 communicator
12, 314 controller
13, 315 storage
21, 22, 2i mobile body
31, 3j remote operation device
41, 4kdisplay device
121 request acceptor
122 mobile body identification unit
123 control command creator
124, 124a, 124b, 124c task priority calculator
125a remote support count counter
126b remote support time predictor
127c operator handling time obtainer
131 device information storage
132 mobile body information storage
133 control program storage
134, 134c operator information storage
135, 135a, 135b, 135c task information storage
312 output unit
313 input unit

## Claims

1. A control method performed by a control device for use in remotely monitoring a plurality of mobile bodies each of which autonomously performs a task, the control method comprising:
receiving, from a first mobile body included in the plurality of mobile bodies, a remote support request indicating a request for remote operation support;
identifying a second mobile body that is a mobile body different from the first mobile body;
obtaining first task information about a first task being performed by the first mobile body and second task information about a second task being performed by the second mobile body;
calculating a priority of the first task and a priority of the second task based on the first task information and the second task information, respectively; and
when the priority of the first task is lower than the priority of the second task, transmitting, to the first mobile body, a first control command for remotely operating the first mobile body without hindering the second mobile body from performing the second task.

2. The control method according to claim 1, wherein
the first task information includes a type of the remote support request, a state of execution of the first task, information of whether time for the first task has been designated, a status of the first task, and an execution fee for the first task, and
the second task information includes the type of the remote support request, a state of execution of the second task, information of whether time for the second task has been designated, a status of the second task, and an execution fee for the second task.

3. The control method according to claim 2, wherein
in the calculating of the priority of the first task,
the priority of the first task is calculated using a point assigned in accordance with a predetermined rule to each of elements that are the type of the remote support request, the state of execution of the first task, the information of whether the time for the first task has been designated, the status of the first task, and the execution fee for the first task, the point including zero, and
in the calculating of the priority of the second task,
the priority of the second task is calculated using a point assigned in accordance with the predetermined rule to each of elements that are the type of the remote support request, the state of execution of the second task, the information of whether the time for the second task has been designated, the status of the second task, and the execution fee for the second task, the point including zero.

4. The control method according to claim 2, wherein
in the calculating of the priority of the first task and the priority of the second task,
the priority of the first task and the priority of the second task are calculated further using a total number of previous remote support requests as the first task information and the second task information.

5. The control method according to claim 4, wherein
the first task information and the second task information further include a first count and a second count each of which is the total number of previous remote support requests,
in the calculating of the priority of the first task,
when the first count included in the first task information exceeds a threshold value, the priority of the first task is calculated using a point assigned in accordance with a predetermined rule to the type of the remote support request, the point including zero, and
when the first count included in the first task information is less than or equal to the threshold value, the priority of the first task is calculated using a point assigned in accordance with the predetermined rule to each of elements that are the type of the remote support request, the state of execution of the first task, the information of whether the time for the first task has been designated, the status of the first task, and the execution fee for the first task, the point including zero, and
in the calculating of the priority of the second task,
when the second count included in the second task information exceeds a threshold value, the priority of the second task is calculated using a point assigned in accordance with the predetermined rule to the type of the remote support request, the point including zero, and
when the second count included in the second task information is less than or equal to the threshold value, the priority of the second task is calculated using a point assigned in accordance with the predetermined rule to each of elements that are the type of the remote support request, the state of execution of the second task, the information of whether the time for the second task has been designated, the status of the second task, and the execution fee for the second task, the point including zero.

6. The control method according to claim 2, wherein
in the calculating of the priority of the first task and the priority of the second task,
the priority of the first task and the priority of the second task are calculated further using, as the first task information and the second task information, predicted remote support time that is remote support time predicted from time taken to handle a previous remote support request.

7. The control method according to claim 6, wherein
the first task information and the second task information further include first predicted remote support time and second predicted remote support time each of which is the remote support time predicted from the time taken to handle the previous remote support request,
in the calculating of the priority of the first task,
when the first predicted remote support time included in the first task information exceeds a threshold value, the priority of the first task is calculated using a point assigned in accordance with a predetermined rule to the type of the remote support request, the point including zero, and
when the first predicted remote support time included in the first task information is less than or equal to the threshold value, the priority of the first task is calculated using a point assigned in accordance with the predetermined rule to each of elements that are the type of the remote support request, the state of execution of the first task, the information of whether the time for the first task has been designated, the status of the first task, and the execution fee for the first task, the point including zero, and
in the calculating of the priority of the second task,
when the second predicted remote support time included in the second task information exceeds a threshold value, the priority of the second task is calculated using a point assigned in accordance with the predetermined rule to the type of the remote support request, the point including zero, and
when the second predicted remote support time included in the second task information is less than or equal to the threshold value, the priority of the second task is calculated using a point assigned in accordance with the predetermined rule to each of elements that are the type of the remote support request, the state of execution of the second task, the information of whether the time for the second task has been designated, the status of the second task, and the execution fee for the second task, the point including zero.

8. The control method according to claim 2, wherein
in the calculating of the priority of the first task and the priority of the second task,
the priority of the first task and the priority of the second task are calculated further using operator handling time that is accumulated time taken to handle a previous remote support request in each of the first mobile body and the second mobile body.

9. The control method according to claim 8, wherein
in the calculating of the priority of the first task,
first operator handling time is obtained, the first operator handling time being accumulated time taken to handle a previous remote support request,
when the first operator handling time obtained exceeds a threshold value, the priority of the first task is calculated using a point assigned in accordance with a predetermined rule to the first operator handling time, the type of the remote support request, the state of execution of the first task, the information of whether the time for the first task has been designated, the status of the first task, and the execution fee for the first task, the point including zero, and
when the first operator handling time obtained is less than or equal to the threshold value, the priority of the first task is calculated using a point assigned in accordance with the predetermined rule to each of elements that are the type of the remote support request, the state of execution of the first task, the information of whether the time for the first task has been designated, the status of the first task, and the execution fee for the first task, the point including zero, and
in the calculating of the priority of the second task,
second operator handling time is obtained, the second operator handling time being accumulated time taken to handle a previous remote support request,
when second operator handling time obtained exceeds a threshold value, the priority of the second task is calculated using a point assigned in accordance with the predetermined rule to each of elements that are the second operator handling time, the type of the remote support request, the state of execution of the second task, the information of whether the time for the second task has been designated, the status of the second task, and the execution fee for the second task, the point including zero, and
when the second operator handling time obtained is less than or equal to the threshold value, the priority of the second task is calculated using a point assigned in accordance with the predetermined rule to each of elements that are the type of the remote support request, the state of execution of the second task, the information of whether the time for the second task has been designated, the status of the second task, and the execution fee for the second task, the point including zero.

10. The control method according to any one of claims 1 to 9, comprising:
when the priority of the first task is higher than the priority of the second task,
(i) transmitting, to the first mobile body, a second control command for remote operation that has been created based on the remote support request; and
(ii) transmitting, to the second mobile body, a third control command to cause the second mobile body to autonomously perform the second task without hindering control of the first mobile body based on the remote support request.

11. The control method according to any one of claims 1 to 9, further comprising:
before obtaining the first task information and the second task information,
determining whether a total number of operators capable of remote operation exceeds a threshold value; and
obtaining the first task information and the second task information when the total number of operators is less than or equal to the threshold value.

12. A control device for use in remotely monitoring a plurality of mobile bodies each of which autonomously performs a task, the control device comprising:
a request acceptor that receives, from a first mobile body included in the plurality of mobile bodies, a remote support request indicating a request for remote operation support;
a mobile body identification unit that identifies a second mobile body that is a mobile body different from the first mobile body;
a task priority calculator that obtains first task information about a first task being performed by the first mobile body and second task information about a second task being performed by the second mobile body, and calculates a priority of the first task and a priority of the second task based on the first task information and the second task information, respectively; and
a control command creator that when the priority of the first task is lower than the priority of the second task, transmits, to the first mobile body, a first control command for remotely operating the first mobile body without hindering the second mobile body from performing the second task.

13. A program for causing a computer to perform a control method that is performed by a control device for use in remotely monitoring a plurality of mobile bodies each of which autonomously performs a task, the program causing the computer to perform:
receiving, from a first mobile body included in the plurality of mobile bodies, a remote support request indicating a request for remote operation support;
identifying a second mobile body that is a mobile body different from the first mobile body;
obtaining first task information about a first task being performed by the first mobile body and second task information about a second task being performed by the second mobile body;
calculating a priority of the first task and a priority of the second task based on the first task information and the second task information, respectively; and
when the priority of the first task is lower than the priority of the second task, transmitting, to the first mobile body, a first control command for remotely operating the first mobile body without hindering the second mobile body from performing the second task.
